(19) Europäisches Patentamt
European Patent Office
Office européen des brevets

(11) EP 3 144 341 B1

(12) **EUROPEAN PATENT SPECIFICATION**

(45) Date of publication and mention of the grant of the patent:
**08.09.2021 Bulletin 2021/36**

(21) Application number: **15822551.6**

(22) Date of filing: **16.06.2015**

(51) Int Cl.:
***C08J 3/20*** (2006.01) ***B60C 1/00*** (2006.01)
***C08K 3/36*** (2006.01) ***C08K 5/375*** (2006.01)
***C08L 7/00*** (2006.01) ***C08L 9/00*** (2006.01)
***C08J 3/00*** (2006.01) ***C08L 9/06*** (2006.01)
***C08K 5/548*** (2006.01) ***C08K 5/39*** (2006.01)

(86) International application number:
**PCT/JP2015/067356**

(87) International publication number:
**WO 2016/009775 (21.01.2016 Gazette 2016/03)**

(54) **METHOD FOR PRODUCING RUBBER COMPOSITION FOR TIRES, AND PNEUMATIC TIRE**

VERFAHREN ZUR HERSTELLUNG VON KAUTSCHUKZUSAMMENSETZUNGEN FÜR REIFEN UND LUFTREIFEN DAMIT

PROCÉDÉ DE FABRICATION DE COMPOSITION DE CAOUTCHOUC POUR PNEUMATIQUE, ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2014 JP 2014145303**

(43) Date of publication of application:
**22.03.2017 Bulletin 2017/12**

(73) Proprietor: **Sumitomo Rubber Industries, Ltd.**
**Kobe-shi, Hyogo 651-0072 (JP)**

(72) Inventors:
- **HATTORI, Takayuki**
**Kobe-shi**
**Hyogo 651-0072 (JP)**
- **ISHINO, Soh**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 149 588**
**WO-A1-2010/125123**
**WO-A1-2013/062648**
**JP-A- 2003 519 270**
**JP-A- 2007 191 677**
**JP-A- 2008 138 081**
**JP-A- 2009 029 883**
**JP-A- 2010 018 706**
**JP-A- 2012 525 459**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 144 341 B1

## Description

### TECHNICAL FIELD

The present invention relates to a process for preparing a rubber composition for a tire and a pneumatic tire produced using the rubber composition prepared by the preparation process.

### BACKGROUND OF THE INVENTION

Recently, there is an increasing social demand for reduction of an amount of exhausted carbon dioxide gas in view of saving of resources and energy, and environmental protection point of view. In automobiles, in order to reduce an amount of exhausted carbon dioxide gas, various countermeasures for weight saving and use of electric energy have been investigated. Therefore, also in tires for vehicles, enhancement of fuel efficiency by improvement of rolling resistance are required and further, a demand for abrasion resistance and durability is increasing.

The mentioned characteristics of a tire depend on various elements such as tire structures and materials to be used therefor, and are strongly influenced especially by performance of a rubber composition to be used on a tread portion coming into contact with a road surface. Therefore, many technical improvements on rubber compositions for a tire, especially for a tread have been investigated, proposed and put into practical use. For example, in order to enhance a balance between a fuel efficiency and an abrasion resistance, use of silica and various silane coupling agents has been investigated. However, in this case, there is a problem that processability is deteriorated. Further, in Patent Document 1, in order to solve the above-mentioned problem, reactivity of a specific polysulfide compound with a specific silane coupling agent is intended to be enhanced, but since the polysulfide compound to be used is a special chemical, there is a problem with higher cost.
In WO 2010/125123 A1 elastomer compositions are disclosed which are produced using two successive preparation phases of mechanical or thermo-mechanical mixing or kneading ("non-productive" phase) at high temperature, followed by a second phase of mechanical mixing ("productive" phase) at lower temperature. During the non-productive phase, the unsaturated silane, the diene elastomer and the filler are mixed together. A peptizing agent is mentioned in WO 2010/125123 A1 as a possible additive.

### PRIOR ART DOCUMENT

Patent Document

Patent Document 1: JP 2014-47324 A

### SUMMARY OF THE INVENTION

### PROBLEM TO BE SOLVED BY THE INVENTION

The present invention relates to a process for preparing a rubber composition for a tire having improved processability, abrasion resistance and fuel efficiency in a good balance and a pneumatic tire produced using the rubber composition for a tire prepared by the preparation process.

### MEANS TO SOLVE THE PROBLEM

The inventors of the present invention have made intensive studies in order to solve the above-mentioned problem, and as a result, have found that the above-mentioned problem can be solved by adding a peptizing agent (a Shakkai agent), which is usually used for mastication of a rubber, at a predetermined timing when kneading rubber components comprising a natural rubber or a synthetic diene rubber with a filler at least comprising silica and a silane coupling agent, and after having made further studies, have completed the present invention.

Namely, the present invention relates to:

[1] a process for preparing a rubber composition for a tire comprising a rubber component (A) comprising a natural rubber and/or a synthetic diene rubber, a filler comprising an inorganic filler (B) at least comprising silica, a silane coupling agent (C) and a peptizing agent (D), wherein a kneading step comprises at least two kneading stages including a first kneading stage using no vulcanization chemicals and a final kneading stage using vulcanization chemicals, and
the first kneading stage comprises adding and kneading of the whole or a part of the silane coupling agent (C) at

the same time as or after kneading of the rubber component (A) and the whole or a part of the inorganic filler (B), and further adding and kneading of the peptizing agent (D) at the same time as or after the addition of the whole or a part of the silane coupling agent (C), and in the first kneading stage, the peptizing agent (D) is added to the rubber composition when a temperature of the rubber composition reached 75°C to 180°C, and a period of time after completion of the addition of the silane coupling agent (C) to the rubber component (A) until addition of the peptizing agent (D) is within 10 to 180 seconds,

[2] the process for preparing a rubber composition for a tire described in [1] above, wherein the peptizing agent (D) is at least one selected from the group consisting of compounds represented by the following general formulas (IX) and (X):

X-Ph-S-S-Ph-X (IX)

X-Ph-S-Zn-S-Ph-X (X)

wherein Ph is a phenyl group or its derivative, and X represents a functional group comprising carbon and hydrogen or comprising carbon, hydrogen and nitrogen,

[3] the process for preparing a rubber composition for a tire described in [1] or [2] above, wherein in the first kneading stage, the peptizing agent (D) is added to the rubber composition when a temperature of the rubber composition reached 90°C to 170°C, preferably 105°C to 165°C, more preferably 120°C to 155°C, further preferably 125°C to 140°C,

[4] the process for preparing a rubber composition for a tire described in any one of [1] to [3] above, wherein in the first kneading stage, a period of time after completion of the addition of the silane coupling agent (C) to the rubber component (A) until addition of the peptizing agent (D) is 30 to 150 seconds, more preferably 30 to 120 seconds,

[5] the process for preparing a rubber composition for a tire of any one of [1] to [4] above, wherein the silane coupling agent (C) is at least one selected from the group consisting of compounds represented by the following general formulas (I) to (IV):

$$(R^1O)_{3-p}(R^2)_pSi\text{-}R^3\text{-}S_a\text{-}R^3\text{-}Si(OR^1)_{3-r}(R^2)_r \ldots \quad (I)$$

wherein in the case of plural $R^1$s, the $R^1$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^2$s, the $R^2$s may be the same or different and each is a linear, cyclic or branched alkyl group having 1 to 8 carbon atoms; in the case of plural $R^3$s, the $R^3$s may be the same or different and each is a linear or branched alkylene group having 1 to 8 carbon atoms; a is 2 to 6 as an average value; p and r may be the same or different and each is 0 to 3 as an average value, however, there is no case where the both of p and r are 3,

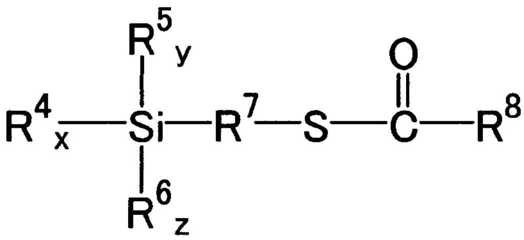 ··· (II)

wherein $R^4$ is a monovalent group selected from -Cl, -Br, $R^9O$-, $R^9C(=O)O$-, $R^9R^{10}C=NO$-, $R^9R^{10}CNO$-, $R^9R^{10}N$- and $-(OSiR^9R^{10})_h(OSiR_9R_{10}R^n)$ (each of $R^9$, $R^{10}$ and $R^{11}$ is hydrogen atom or a monovalent hydrocarbon group having 1 to 18 carbon atoms, and h is 1 to 4 as an average value); $R^5$ is $R^4$, hydrogen atom or a monovalent hydrocarbon group having 1 to 18 carbon atoms; $R^6$ is $R^4$, $R^5$, hydrogen atom or a monovalent group represented by $-[O(R^{12}O)_j]_{0.5}$($R^{12}$ is an alkylene group having 1 to 18 carbon atoms, j is an integer of 1 to 4); $R^7$ is a divalent hydrocarbon group having 1 to 18 carbon atoms; $R^8$ is a monovalent hydrocarbon group having 1 to 18 carbon atoms; and x, y and z are numerals satisfying relations of $x+y+2z=3$, $0\leq x\leq 3$, $0\leq y\leq 2$ and $0\leq z\leq 1$,

$$(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \ldots \quad (III)$$

wherein in the case of plural $R^{13}$s, the $R^{13}$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^{14}$s, the $R^{14}$s may be the same or different and each is a linear, cyclic or

branched alkyl group having 1 to 8 carbon atoms; in the case of plural $R^{15}$s, the $R^{15}$s may be the same or different and each is a linear or branched alkylene group having 1 to 8 carbon atoms; $R^{16}$ is any one of divalent groups represented by ($-S-R^{17}-S-$), ($-R^{18}-S_{m1}-R^{19}-$) and ($-R^{20}-S_{m2}-R^{21}-S_{m3}-R^{22}-$) (each of $R^{17}$ to $R^{22}$ is a divalent hydrocarbon group having 1 to 20 carbon atoms, a divalent aromatic group or a divalent organic group having a hetero element except sulfur and oxygen, each of m1, m2 and m3 is 1 or more and less than 4 as an average value); in the case of plural k's, the k's may be the same or different and each is 1 to 6 as an average value; each of s and t is 0 to 3 as an average value, however, there is no case where the both of s and t are 3, and

$$\underbrace{[R^{23}-C(=O)-S-G-SiZ^{a}_{u}Z^{b}_{v}Z^{c}_{w}]_{m}}_{A}\underbrace{[HS-G-SiZ^{a}_{u}Z^{b}_{v}Z^{c}_{w}]_{n}}_{B} \quad \cdots \quad (IV)$$

wherein $R^{23}$ is a linear, branched or cyclic alkyl group having 1 to 20 carbon atoms; in the case of plural Gs, the Gs may be the same or different and each is an alkanediyl group or alkenediyl group having 1 to 9 carbon atoms; in the case of plural $Z^a$s, the $Z^a$s may be the same or different and each is a functional group being capable of bonding to two silicon atoms and selected from $[-O-]_{0.5}$, $[-O-G-]_{0.5}$ and $[-O-G-O-]_{0.5}$; in the case of plural $Z^b$s, the $Z^b$s may be the same or different and each is a functional group being capable of bonding to two silicon atoms and represented by $[-O-G-O-]_{0.5}$; in the case of plural $Z^c$s, the $Z^c$s may be the same or different and each is a functional group selected from -Cl, -Br, $-OR^a$, $R^aC(=O)O-$, $R^aR^bC=NO-$, $R^aR^bN-$, $R^a-$ and HO-G-O- (G is the same as the above definition), and each of $R^a$ and $R^b$ is a linear, branched or cyclic alkyl group having 1 to 20 carbon atoms; m, n, u, v and w are $1 \le m \le 20$, $0 \le n \le 20$, $0 \le u \le 3$, $0 \le v \le 2$ and $0 \le w \le 1$, respectively and $(u/2)+v+2w=2$ or 3; in the case of moiety A being plural, $Z^a_u$, $Z^b_v$ and $Z^c_w$ in the plural moiety A may be the same or different and in the case of moiety B being plural, $Z^a_u$, $Z^b_v$ and $Z^c_w$ in the plural moiety B may be the same or different,

[6] the process for preparing a rubber composition for a tire described in [5] above, wherein the silane coupling agent (C) is the compound represented by the general formula (I),

[7] the process for preparing a rubber composition for a tire of any one of [1] to [6] above, wherein a content of the inorganic filler (B) in the filler is not less than 30% by mass, preferably not less than 40% by mass, further preferably not less than 70% by mass,

[8] the process for preparing a rubber composition for a tire of any one of [1] to [7] above, wherein in the rubber composition at the first kneading stage, the number of molecules of the peptizing agent (D) is 0.1 to 1.0 time, preferably 0.2 to 0.8 time, more preferably 0.3 to 0.7 time the number of molecules of the silane coupling agent (C),

[9] the process for preparing a rubber composition for a tire of any one of [1] to [8] above, wherein the rubber composition at the first kneading stage is one comprising an organic acid compound and 50 mol % or more in the organic acid compound is a stearic acid, and

[10] a pneumatic tire produced using the rubber composition for a tire prepared by the preparation process of any one of [1] to [9] above.

## EFFECTS OF THE INVENTION

According to the present invention, it is possible to provide a process for preparing a rubber composition for a tire having, in a good balance, improved processability in its unvulcanized state, and improved abrasion resistance and fuel efficiency after the vulcanization and a pneumatic tire produced using the rubber composition for a tire prepared by the preparation process.

## DETAILED DESCRIPTION

The constitution of the present invention is then explained below in detail.

<Preparation process>

The process for preparing a rubber composition of the present invention is that the rubber composition comprises a rubber component (A) comprising a natural rubber and/or a synthetic diene rubber, a filler comprising an inorganic filler (B) at least comprising silica, a silane coupling agent (C) and a peptizing agent (D),
the process being featured by that a kneading step comprises at least two kneading stages including a first kneading stage using no vulcanization chemicals and a final kneading stage using vulcanization chemicals, and
the first kneading stage comprises adding and kneading of the whole or a part of the silane coupling agent (C) at the same time as or after kneading of the rubber component (A) and the whole or a part of the inorganic filler (B), and further adding and kneading of the peptizing agent (D) at the same time as or after the addition of the whole or a part of the

silane coupling agent (C).

(First kneading stage)

The first kneading stage is a kneading stage for adding the inorganic filler (B) and the silane coupling agent (C) to the rubber component (A) and performing the kneading, namely a kneading stage using no vulcanization chemicals, and the present invention is characterized in that the kneading is performed by adding the peptizing agent (D) in the first kneading stage. In the present invention, the purpose of adding the peptizing agent (D) in the first kneading stage is to enhance a coupling activity of the silane coupling agent (C), thereby making dispersion of the inorganic filler into the rubber composition more satisfactory. Further, the purpose of adding the peptizing agent (D) at the timing, namely "at the same time as or after the addition of the whole or a part of the silane coupling agent (C)" is to further increase an enhancing effect to the coupling activity by the compounding of the peptizing agent (D). In other words, the compounding makes it possible to progress the reaction of the silane coupling agent (C) with the rubber component (A) after the reaction of the inorganic filler (B) with the silane coupling agent (C) has been fully progressed. Accordingly, in the case where the first kneading stage "comprises adding and kneading of the whole or a part of the silane coupling agent (C) at the same time as or after kneading of the rubber component (A) and the whole or a part of the inorganic filler (B), and further adding and kneading of the peptizing agent (D) at the same time as or after the addition of the whole or a part of the silane coupling agent (C)", it is preferable that by the time when the peptizing agent (D) is added, the addition of the whole of the inorganic filler (B) and the silane coupling agent (C) has already been completed. Namely, it is preferable that any part of the inorganic filler (B) and the silane coupling agent (C) is added in earlier stage. The first kneading stage is a stage for kneading the rubber component (A), the inorganic filler (B) and the silane coupling agent (C). The first kneading stage does not include possible prior stage such as a stage of kneading the rubber component (A) and a filler other than the inorganic filler (B) or a stage of preliminary kneading (masticating) of only the rubber component (A). Here, the vulcanization chemicals are chemicals for the vulcanization, and specifically indicate, for example, a vulcanizing agent and a vulcanization accelerator.

In the first kneading stage, the peptizing agent (D) is added 10 to 180 seconds after completion of the addition of the silane coupling agent (C) (preferably addition of the whole thereof). The lower limit of the timing is more preferably 30 seconds or more, and the upper limit is more preferably 150 seconds or less, further preferably 120 seconds or less. When this period of time is 10 seconds or more, it is preferable since the reaction of (B) with (C) can be advanced preliminarily. On the other hand, if the period of time exceeds 180 seconds, the reaction of (B) with (C) advances excessively, and there is a tendency that a further effect to be obtained by the addition of (D) is hardly enjoyed.

In order to enhance a coupling activity of the silane coupling agent (C), the temperature of the rubber composition when adding the peptizing agent (D) at the first kneading stage is 75°C to 180°C. When the temperature is lower than 75°C, there is a tendency that it is difficult to enhance a coupling activity, and when the temperature exceeds 180°C, the rubber may be deteriorated due to high temperature. The lower limit of the temperature is more preferably 90°C, further preferably 105°C, further preferably 120°C, further preferably 125°C. On the other hand, the upper limit of the temperature is more preferably 170°C, further preferably 165°C, further preferably 155°C, further preferably 140°C.

The first kneading stage can be divided further into a plurality of stages. For example, there is a case of firstly adding a part of the inorganic filler (B) and/or a part of the silane coupling agent (C) to the rubber component (A), kneading the mixture, and once discharging a kneaded product, and next adding, to the kneaded product, the remaining part of the inorganic filler (B) and/or the remaining part of the silane coupling agent (C) and the peptizing agent (D) and kneading the mixture to obtain a kneaded product. In this case, the chemicals (B), (C) and (D) may be added simultaneously in each of the respective stages or may be added in order of (B), (C) and (D) at given intervals. Here, as mentioned above, the peptizing agent (D) is added at the same time as the termination of the addition of the whole of the silane coupling agent (C) or within a given period of time thereafter.

(Final kneading stage)

In the present invention, the final kneading stage is a final stage of adding and kneading vulcanization chemicals.

(Intermediate kneading stage)

The step of kneading the rubber composition of the present invention may further include an intermediate kneading stage between the first kneading stage and the final kneading stage according to necessity. Here, the intermediate kneading stage is a stage of adding and kneading chemicals to be blended to the rubber composition such as chemicals other than the above (A) to (D) and the vulcanization chemicals, for example, a filler other than the inorganic filler (B).

(Kneading time and temperature)

In the first kneading stage, a maximum temperature of the rubber composition is preferably 120°C to 190°C, more preferably 130°C to 175°C, further preferably 140°C to 170°C. In addition, a kneading time is preferably from ten seconds to twenty minutes, more preferably from thirty seconds to ten minutes, further preferably from sixty seconds to five minutes.

In the case of including the intermediate kneading stage, a maximum temperature of the rubber composition in the intermediate kneading stage is preferably 120°C to 190°C, more preferably 130°C to 175°C, further preferably 140°C to 170°C. In addition, a kneading time is preferably from ten seconds to twenty minutes, more preferably from thirty seconds to ten minutes, further preferably from sixty seconds to five minutes.

Further, in the final kneading stage, a maximum temperature of the rubber composition is preferably 60°C to 140°C, more preferably 80°C to 120°C, further preferably 100°C to 120°C. In addition, a kneading time is preferably from ten seconds to twenty minutes, more preferably from ten seconds to ten minutes, further preferably from twenty seconds to five minutes.

When advancing from a certain stage to a next stage, it is preferable to proceed to the next stage after decreasing the temperature of the rubber composition by 10°C or more from the temperature thereof after completion of the kneading at the instant stage.

The preparation process of the present invention can also be executed by adequately kneading other chemicals usually compounded in this field in addition to the above-mentioned chemicals.

<Rubber component (A)>

In the process for preparing the rubber composition of the present invention, the rubber component (A) is a rubber component comprising a natural rubber (NR) and/or a synthetic diene rubber. Here, a styrene-butadiene copolymer rubber (SBR), a polybutadiene rubber (BR), a polyisoprene rubber (IR), a butyl rubber (IIR), an ethylene-propylene-diene terpolymer rubber (EPDM), and the like can be used as the synthetic diene rubber. The natural rubber and the synthetic diene rubber may be used alone or two or more thereof may be blended.

<Silane coupling agent (C)>

In the present invention, any of silane coupling agents that have been used together with silica in the rubber industry may be used as the silane coupling agent (C). Examples thereof include sulfide silane coupling agents such as bis(3-triethoxysilylpropyl)disulfide, bis(3-triethoxysilylpropyl)tetrasulfide, and Si75 (bis(3-triethoxysilylpropyl)polysulfide in which the number of Ss in one molecule thereof is 2.4 on an average) available from Evonik Degussa; mercapto silane coupling agents such as 3-mercaptopropyltrimethoxysilane, 3-mercaptopropyltriethoxysilane, Si363 available from Evonik Degussa and NXT, NXT-Z30, NXT-Z45 and NXT-Z60 available from Momentive Performance Materials; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. Among these, sulfide silane coupling agents and mercapto silane coupling agents are preferred from the viewpoint of dispersibility of silica.

Further, it is preferable that the silane coupling agent (C) is at least one selected from the group consisting of compounds represented by the following general formulas (I) to (IV). In the present invention, by the use of such silane coupling agent (C), the rubber composition for a tire which is excellent in workability in processing the rubber and has good abrasion resistance can be obtained. The following general formulas (I) to (IV) are explained in order.

$$(R^1O)_{3-p}(R^2)_pSi\text{-}R^3\text{-}S_a\text{-}R^3\text{-}Si(OR^1)_{3-r}(R^2)_r \ ... \qquad (I)$$

wherein in the case of plural $R^1$s, the $R^1$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^2$s, the $R^2$s may be the same or different and each is a linear, cyclic or branched alkyl group having 1 to 8 carbon atoms; in the case of plural $R^3$s, the $R^3$s may be the same or different and each is a linear or branched alkylene group having 1 to 8 carbon atoms; a is 2 to 6 as an average value; p and r may be the same or different and each is 0 to 3 as an average value, however, there is no case where the both of p and r are 3.

Examples of the silane coupling agent (C) represented by the above general formula (I) include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, bis(2-monoethoxydimethylsilylethyl)disulfide, and the like.

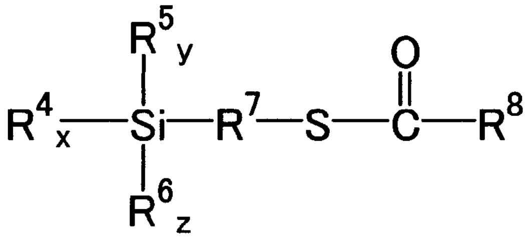

··· (II)

wherein $R^4$ is a monovalent group selected from -Cl, -Br, $R^9O$-, $R^9C(=O)O$-, $R^9R^{10}C=NO$-, $R^9R^{10}CNO$-, $R^9R^{10}N$- and $-(OSiR^9R^{10})_h(OSiR^9R^{10}R^{11})$ (each of $R^9$, $R^{10}$ and $R^{11}$ is hydrogen atom or a monovalent hydrocarbon group having 1 to 18 carbon atoms, and h is 1 to 4 as an average value); $R^5$ is $R^4$, hydrogen atom or a monovalent hydrocarbon group having 1 to 18 carbon atoms, $R^6$ is $R^4$, $R^5$, hydrogen atom or a monovalent group represented by $-[O(R^{12}O)_j]_{0.5}$ ($R^{12}$ is an alkylene group having 1 to 18 carbon atoms, j is an integer of 1 to 4); $R^7$ is a divalent hydrocarbon group having 1 to 18 carbon atoms, $R^8$ is a monovalent hydrocarbon group having 1 to 18 carbon atoms, and x, y and z are numerals satisfying relations of $x+y+2z=3$, $0 \leq x \leq 3$, $0 \leq y \leq 2$ and $0 \leq z \leq 1$.

In the above general formula (II), $R^8$, $R^9$, $R^{10}$ and $R^{11}$ may be the same or different and each is preferably a group selected from the group consisting of linear, cyclic or branched alkyl group, alkenyl group, aryl group and aralkyl group, each having 1 to 18 carbon atoms. When $R^5$ is a monovalent hydrocarbon group having 1 to 18 carbon atoms, $R^5$ is preferably a group selected from the group consisting of linear, cyclic or branched alkyl group, alkenyl group, aryl group and aralkyl group. $R^{12}$ is preferably a linear, cyclic or branched alkylene group, and a linear alkylene group is particularly preferable. Examples of $R^7$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The above alkylene group and alkenylene group may be either linear or branched, and the above cycloalkylene group, cycloalkylalkylene group, arylene group and aralkylene group may have a substituent such as a lower alkyl group on a ring thereof. Preferred $R^7$ is an alkylene group having 1 to 6 carbon atoms, and particularly preferred are linear alkylene groups, for example, a methylene group, an ethylene group, a trimethylene group, a tetramethylene group, a pentamethylene group and a hexamethylene group.

Examples of the monovalent hydrocarbon group having 1 to 18 carbon atoms of $R^5$, $R^8$, $R^9$, $R^{10}$ and $R^{11}$ in the above general formula (II) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, naphthylmethyl, and the like. In the above general formula (II), examples of $R^{12}$ include methylene, ethylene, trimethylene, tetramethylene, pentamethylene, hexamethylene, octamethylene, decamethylene, dodecamethylene, and the like.

Examples of the silane coupling agent (C) represented by the above general formula (II) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, and the like. Among these, 3-octanoylthiopropyltriethoxysilane (tradename: NXT Silane available from General Electric Silicones) is particularly preferred.

$$(R^{13}O)_{3-s}(R^{14})_sSi-R^{15}-S_k-R^{16}-S_k-R^{15}-Si(OR^{13})_{3-t}(R^{14})_t \ldots \quad (III)$$

wherein in the case of plural $R^{13}$s, the $R^{13}$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^{14}$s, the $R^{14}$s may be the same or different and each is a linear, cyclic or branched alkyl group having 1 to 8 carbon atoms; in the case of plural $R^{15}$s, the $R^{15}$s may be the same or different and each is a linear or branched alkylene group having 1 to 8 carbon atoms; $R^{16}$ is any one of divalent groups represented by general formulas $(-S-R^{17}-S-)$, $(-R^{18}-S_{mi}-R^{19}-)$ and $(-R^{20}-S_{m2}-R^{21}-S_{m3}-R^{22}-)$ (each of $R^{17}$ to $R^{22}$ is a divalent hydrocarbon group having 1 to 20 carbon atoms, a divalent aromatic group or a divalent organic group having a hetero element except sulfur and

oxygen, each of m1, m2 and m3 is 1 or more and less than 4 as an average value); in the case of plural k's, the k's may be the same or different and each is 1 to 6 as an average value; each of s and t is 0 to 3 as an average value, however, there is no case where the both of s and t are 3.

Examples of the suitable silane coupling agent (C) represented by the above general formula (III) include compounds represented by:

an average composition formula of $(CH_3CH_2O)_3Si\text{-}(CH_2)_3\text{-}S_2\text{-}(CH_2)_6\text{-}S_2\text{-}(CH_2)_3\text{-}Si(OCH_2CH_3)_3$,
an average composition formula of $(CH_3CH_2O)_3Si\text{-}(CH_2)_3\text{-}S_2\text{-}(CH_2)_{10}\text{-}S_2\text{-}(CH_2)_3\text{-}Si(OCH_2CH_3)_3$,
an average composition formula of $(CH_3CH_2O)_3Si\text{-}(CH_2)_3\text{-}S_3\text{-}(CH_2)_6\text{-}S_3\text{-}(CH_2)_3\text{-}Si(OCH_2CH_3)_3$,
an average composition formula of $(CH_3CH_2O)_3Si\text{-}(CH_2)_3\text{-}S_4\text{-}(CH_2)_6\text{-}S_4\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_6\text{-}S_2\text{-}(CH_2)_6\text{-}S\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_6\text{-}S_{2.5}\text{-}(CH_2)_6\text{-}S\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_6\text{-}S_3\text{-}(CH_2)_6\text{-}S\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_6\text{-}S_4\text{-}(CH_2)_6\text{-}S\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_{10}\text{-}S_2\text{-}(CH_2)_{10}\text{-}S\text{-}(CH_2)_3\text{-}Si(OCH_2CH_3)_3$,
an average composition formula of $(CH_3CH_2O)_3Si\text{-}(CH_2)_3\text{-}S_4\text{-}(CH_2)_6\text{-}S_4\text{-}(CH_2)_6\text{-}S_4\text{-}(CH_2)_3\text{-}Si(OCH_2CH_3)_3$,
an average composition formula of $(CH_3CH_2O)_3Si\text{-}(CH_2)_3\text{-}S_2\text{-}(CH_2)_6\text{-}S_2\text{-}(CH_2)_6\text{-}S_2\text{-}(CH_2)_3\text{-}Si(OCH_2CH_3)_3$,
an average composition formula of $(CH_3CH_2O)_3Si\text{-}(CH_2)_3\text{-}S\text{-}(CH_2)_6\text{-}S_2\text{-}(CH_2)_6\text{-}S_2\text{-}(CH_2)_6\text{-}S\text{-}(CH_2)_3\text{-}Si(OCH_2CH_3)_3$,

and the like.

$$\underbrace{[R^{23}\text{-}C(=O)\text{-}S\text{-}G\text{-}SiZ^{a}_{u}Z^{b}_{v}Z^{c}_{w}]_m}_{A}\underbrace{[HS\text{-}G\text{-}SiZ^{a}_{u}Z^{b}_{v}Z^{c}_{w}]_n}_{B} \quad \cdots \quad (IV)$$

wherein $R^{23}$ is a linear, branched or cyclic alkyl group having 1 to 20 carbon atoms; in the case of plural Gs, the Gs may be the same or different and each is an alkanediyl group or alkenediyl group having 1 to 9 carbon atoms; in the case of plural $Z^a$s, the $Z^a$s may be the same or different and each is a functional group being capable of bonding to two silicon atoms and selected from $[\text{-O-}]_{0.5}$, $[\text{-O-G-}]_{0.5}$ and $[\text{-O-G-O-}]_{0.5}$; in the case of plural $Z^b$s, the $Z^b$s may be the same or different and each is a functional group being capable of bonding to two silicon atoms and represented by $[\text{-O-G-O-}]_{0.5}$; in the case of plural $Z^c$s, the $Z^c$s may be the same or different and each is a functional group selected from -Cl, -Br, $\text{-OR}^a$, $R^aC(=O)O\text{-}$, $R^aR^bC=NO\text{-}$, $R^aR^bN\text{-}$, $R^a\text{-}$ and HO-G-O- (G is the same as the above definition), and each of $R^a$ and $R^b$ is a linear, branched or cyclic alkyl group having 1 to 20 carbon atoms; m, n, u, v and w are $1 \le m \le 20$, $0 \le n \le 20$, $0 \le u \le 3$, $0 \le v \le 2$ and $0 \le w \le 1$, respectively and $(u/2)+v+2w=2$ or 3; in the case of moiety A being plural, $Z^a_u$, $Z^b_v$ and $Z^c_w$ in the plural moiety A may be the same or different and in the case of moiety B being plural, $Z^a_u$, $Z^b_v$ and $Z^c_w$ in the plural moiety B may be the same or different.

Examples of the silane coupling agent (C) represented by the above general formula (IV) include those of chemical formula (V), chemical formula (VI) and chemical formula (VII).

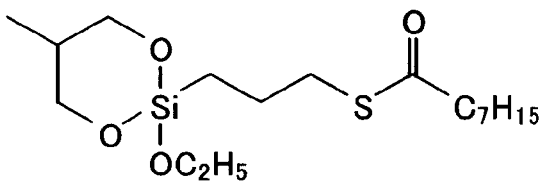

$\cdots$ (V)

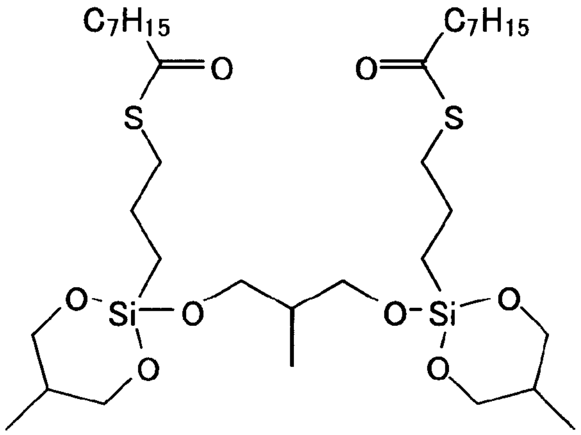

・・・(VI)

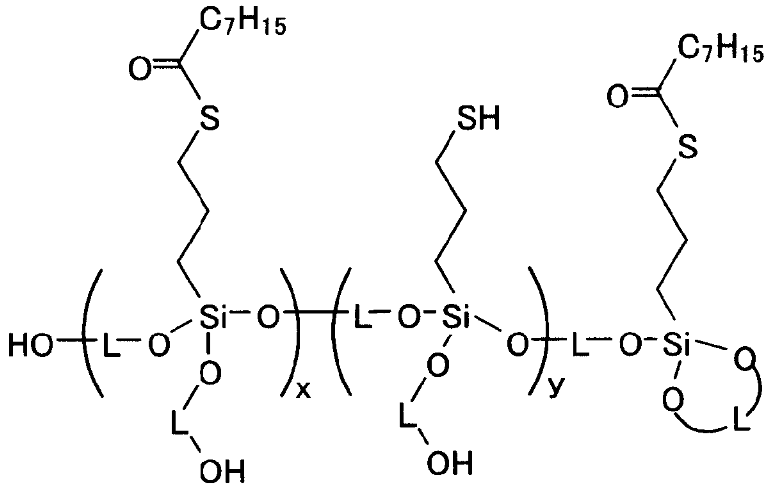

・・・(VII)

wherein L is independently an alkanediyl group or alkenediyl group having 1 to 9 carbon atoms, x=m, y=n.

Example of the silane coupling agent represented by the chemical formula (V) includes a commercially available one of tradename "NXT Low-V Silane" of Momentive Performance Materials. Further, example of the silane coupling agent represented by the chemical formula (VI) similarly includes a commercially available one of tradename "NXT Ultra Low-V Silane" of Momentive Performance Materials. Furthermore, example of the silane coupling agent represented by the chemical formula (VII) includes tradename "NXT Z" of Momentive Performance Materials.

The silane coupling agents of the above general formula (II) and chemical formulas (V) and (VI) have a protected mercapto group, and therefore, generation of initial vulcanization (scorch) can be prevented during the processing in the step before the vulcanization step, and processability becomes satisfactory. The silane coupling agents of the chemical formulas (V), (VI) and (VII) are preferred from the viewpoint of working environment since an alkoxysilane has a large number of carbon atoms, thereby generation of volatile organic compounds, VOC, (especially alcohol) being less. Furthermore, the silane coupling agents of the chemical formula (VII) are further preferred since low heat build-up property of tire is obtained.

Among the compounds represented by the above-mentioned general formulas (I) to (IV), particularly preferred as the silane coupling agent (C) according to the present invention are the compounds represented by the above-mentioned general formula (I). This is because polysulfide binding sites reacting with the rubber component (A), of the peptizing agent (D) are easily activated by using these compounds.

The silane coupling agent (C) according to the present invention is preferably one having a small sulfur content. For example, an average value of "a" in the general formula (I) is from 2 to 6, preferably from 2 to 5, more preferably from 2 to 4, further preferably from 2 to 3, particularly preferably from 2 to 2.5. Further, an average value of each "k" in the general formula (III) is from 1 to 6, preferably from 1 to 5, more preferably from 1 to 4, further preferably from 1 to 3, particularly preferably from 1 to 2.5.

In the present invention, the silane coupling agents (C) may be used alone or may be used in combination of two or more thereof.

The compounding amount of the silane coupling agent (C) in the rubber composition according to the present invention is preferably from (1/100) to (20/100) in a mass ratio of (silane coupling agent (C) / inorganic filler (B)). When

the compounding amount is not less than (1/100), an effect of improving low heat build-up property of the rubber composition is exhibited more suitably, and when the compounding amount is not more than (20/100), cost of the rubber composition decreases and economic efficiency is enhanced. The mass ratio is more preferably from (3/100) to (20/100), particularly preferably from (4/100) to (10/100).

<Filler>

The filler used in the process for preparing the rubber composition of the present invention is a filler comprising an inorganic filler (B) at least comprising silica.

(Inorganic filler (B))

In the inorganic filler (B), any of commercially available silica can be used. In particular, wet silica, dry silica and colloidal silica are preferably used, and wet silica is particularly preferred. In the present invention, the reason why silica is used indispensably as the inorganic filler (B) is that silica is preferred from the viewpoint of compatibility of fuel efficiency (rolling resistance) and abrasion resistance.

The BET specific surface area of silica (measured according to ISO 5794/1) is preferably from 40 to 350 $m^2/g$. Silica having the BET specific surface area within this range has an advantage that a property for reinforcing the rubber is compatible with dispersibility of the silica in the rubber component. From this point of view, silica having the BET specific surface area within the range of 80 to 350 $m^2/g$ is more preferred, silica having the BET specific surface area within the range of more than 130 $m^2/g$ and not more than 350 $m^2/g$ is further preferred, and silica having the BET specific surface area within the range of 135 to 350 $m^2/g$ is particularly preferred. Examples of usable silica are commercially available ones such as brand names "Nipsil AQ" (BET specific surface area=205 $m^2/g$) and "Nipsil KQ" (BET specific surface area=240 $m^2/g$) available from TOSOH SILICA CORPORATION, "ULTRASIL VN3" (BET specific surface area=175 $m^2/g$) available from Degussa, and the like.

Inorganic compounds represented by the following general formula (VIII) can be used as the inorganic filler (B) other than silica.

$$dM^1 \cdot xSiO_y \cdot zH_2O \qquad (VIII)$$

wherein $M^1$ is at least one selected from a metal, a metal oxide or hydroxide and hydrates thereof, or metal carbonates, the metal being selected from the group consisting of aluminum, magnesium, titanium, calcium and zirconium; d, x, y and z are integers of 1 to 5, 0 to 10, 2 to 5 and 0 to 10, respectively; and when both of x and z are 0, the inorganic compound is a metal, a metal oxide or a metal hydroxide of at least one selected from aluminum, magnesium, titanium, calcium and zirconium.

Examples of usable inorganic compound represented by the general formula (VIII) include alumina ($Al_2O_3$) such as $\gamma$-alumina and $\alpha$-alumina, hydrated alumina ($Al_2O_3 \cdot H_2O$) such as boehmite and diaspore, aluminum hydroxides [$Al(OH)_3$] such as gibbsite and bayerite, aluminum carbonate [$Al_2(CO_3)_2$], magnesium hydroxide [$Mg(OH)_2$], magnesium oxide (MgO), magnesium carbonate ($Mg(CO_3)$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], magnesium aluminum oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_3$, etc.), calcium silicate ($Ca_2 \cdot SiO_4$, etc.), calcium aluminum silicate ($Al_2O_3 \cdot CaO \cdot 2SiO_2$, etc.), calcium magnesium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], crystalline aluminosilicates such as various zeolites comprising hydrogen, an alkali metal or an alkali earth metal that compensate electric charge. Further, it is preferable that $M^1$ in the general formula (VIII) is at least one selected from an aluminum metal, an aluminum oxide or an aluminum hydroxide and hydrates thereof, or aluminum carbonates. The inorganic compounds represented by the general formula (VIII) may be used alone or may be used in a mixture of two or more thereof. An average particle size of these inorganic compounds is preferably within a range of from 0.01 to 10 $\mu$m, more preferably from 0.05 to 5 $\mu$m from the viewpoint of a balance between workability in kneading, abrasion resistance and wet grip performance.

In the present invention, silica may be used alone or may be used in combination with one or more of the inorganic compounds represented by the general formula (VIII) as the inorganic filler (B).

In the present invention, the filler may comprise carbon black in addition to the above-mentioned inorganic filler (B) as desired. When carbon black is compounded, an effect of decreasing an electric resistance and inhibiting electrification can be enjoyed. Carbon black is not limited particularly, and it is preferable to use carbon black of SAF, ISAF, IISAF, N339, HAF, FEF, GPF or SRF grade having a high, medium or low structure, particularly SAF, ISAF, IISAF, N339, HAF or FEF grade. A nitrogen adsorption specific surface area ($N_2SA$, to be measured according to JIS K 6217-2:2001)

of carbon black is preferably from 30 to 250 $m^2/g$. One kind of carbon black may be used alone, or carbon blacks may be used in combination of two or more kinds thereof. In the present invention, carbon black is not included in the inorganic filler (B).

In the present invention, it is preferable to use the inorganic filler (B) in an amount of from 20 to 120 parts by mass based on 100 parts by mass of the rubber component (A). When the amount of inorganic filler (B) is not less than 20 parts by mass, it is preferable from a point of securing wet grip performance. When the amount is not more than 120 parts by mass, it is preferable from the viewpoint of decrease in rolling resistance. Further, it is preferable to use the inorganic filler (B) in an amount of from 30 to 100 parts by mass.

Furthermore, in the present invention, it is preferable to use the filler in an amount of 20 to 150 parts by mass based on 100 parts by mass of the rubber component (A). When the amount of filler is not less than 20 parts by mass, it is preferable from a point of improvement of a property for reinforcing the rubber composition, and when the amount is not more than 150 parts by mass, it is preferable from the viewpoint of decrease in rolling resistance.

In the filler of the present invention, the amount of inorganic filler (B) is preferably not less than 30% by mass, more preferably not less than 40% by mass, further preferably not less than 70% by mass from the viewpoint of compatibility of wet grip performance with rolling resistance. In addition, when silica is used as the inorganic filler (B), an amount of silica in the filler is preferably not less than 30% by mass, further preferably not less than 35% by mass.

<Peptizing agent (D)>

In the present invention, the peptizing agent (D) also called the Shakkai agent has been used in the mastication of a natural rubber in order to accelerate the mastication and shorten a mastication time. In the present invention, the peptizing agents which have been used can be used without any limitation, and particularly those having a sulfur atom are preferred, and more preferred is one having two or more sulfur atoms in one molecule thereof.

Examples of the peptizing agent (D) include disulfides such as o,o-dibenzamidodiphenyl disulfide, dixylyldisulfide, dibenzoyl disulfide and di(pentachlorophenyl); thiophenols such as 2-thionaphthol, xylenethiol, pentachlorothiophenol, 4-tert-butyl-o-thiocresol, 4-tert-butyl-p-thiocresol, 4-butyl-o-thiocresol and 2-benzamidothiophenol; and thiocarbonic acid such as thiobenzoic acid. Further, metallic salts or non-metallic salts thereof such as zinc 2-benzamidothiophenate, zinc pentachlorothiophenate, zinc salt of 4-tert-butyl-o-thiocresol and zinc thiobenzoate can be used. Furthermore, diacyl peroxide such as benzoyl peroxide, dialkyl peroxide such as dicumyl peroxide, other organic peroxides, and the like can also be used. Other examples include 4,4'-dithiomorpholine, mixed dixylyl·disulfide, zinc thiobenzoate, dibenzamidothiophenyl disulfide, a mixture of dibenzamidothiophenyl disulfide and stearic acid, alkylated phenol·sulfide, aromatic sulfur compound, organic complex compound, dinitrosoresorcinol, high molecular weight oil-soluble sulfonic acids, and the like, and further a mixture of dibenzamidodiphenyl disulfide and stearic acid. Examples of metals constituting the above-mentioned metallic salts include sodium, potassium, lithium, magnesium, calcium, barium, cesium, zinc, and the like, and among them, zinc is preferable. Example of the non-metallic salt includes an ammonium salt. Among these salts, zinc salts are most preferable.

Preferable examples of the peptizing agent (D) include compounds represented by the following general formulae (IX) and (X).

X-Ph-S-S-Ph-X (IX)

X-Ph-S-Zn-S-Ph-X (X)

wherein Ph represents a phenyl group or its derivative; and X represents a hydrocarbon group, a hydrocarbon group having a functional group comprising at least a nitrogen atom, or halogen atom.

In the above general formulae (IX) and (X), examples of "a phenyl group or its derivative" regarding Ph include aryl groups of 6- to 10-membered ring such as a phenyl group and a naphthyl group, and among these, a phenyl group is preferred. Further, examples of "a hydrocarbon group" regarding X include an aliphatic hydrocarbon group (an alkyl group, and the like), an alicyclic hydrocarbon group (a phenyl group, a naphthyl group, and the like), and the like, and among these, an alkyl group is preferred. Furthermore, example of "a hydrocarbon group having a functional group comprising at least a nitrogen atom" include a benzoylamino group, and the like. Examples of halogen atoms include fluorine atom, chlorine atom, bromine atom and iodine atom.

In the present invention, the peptizing agents can be used alone or can be used in combination of two or more kinds thereof.

The compounding amount of the peptizing agent used in the present invention is preferably 0.05 to 10 parts by mass, more preferably 0.1 to 6 parts by mass, further preferably 0.2 to 2 parts by mass based on 100 parts by mass of the rubber component. When the compounding amount is less than 0.05 part by mass, a targeted effect of the present invention is difficult to obtain, and when the compounding amount is more than 10 parts by mass, there is a tendency

that the rubber is deteriorated and an unnecessary increase in cost arises.

In the first kneading stage of the present invention, the number of molecules (the number of moles) of the peptizing agent (D) in the rubber composition is preferably 0.1 to 1.0 time, more preferably 0.2 to 0.8 time, further preferably 0.3 to 0.7 time the number of molecules of the silane coupling agent (C). When the number of molecules (the number of moles) of the peptizing agent (D) is less than 0.1 time, there is a tendency that a predetermined effect of the present invention is difficult to obtain, and when more than 1.0 time, an effect resulting from an increased amount is no longer found, and an unnecessary increase in cost may arise or the rubber may be deteriorated due to an excessive amount of the peptizing agent.

<Other chemicals>

In the preparation process of the present invention, in addition to the above-mentioned chemicals, chemicals which are usually compounded in this field, for example, oil, wax, an antioxidant, an organic acid compound such as stearic acid, zinc oxide, and vulcanization chemicals such as sulfur and vulcanization accelerators can be compounded optionally.

(Organic acid compound (E))

Examples of the organic acid compound (E) to be compounded in the rubber composition of the present invention include, for example, organic acids such as saturated fatty acids and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid and Nervonic acid, and the like, resin acids such as rosin acid and modified rosin acid, and the like, and esters of the saturated fatty acids, the unsaturated fatty acids and the resin acids. In the preparation process of the present invention, it is preferable that the number of molecules (the number of moles) of the organic acid compound in the rubber composition at the first kneading stage is 1.5 or less times the number of molecules (the number of moles) of the peptizing agent (D). The purpose of this is to properly inhibit a decrease in an effect of improving an activation of a coupling function due to compounding of the peptizing agent (D). In the present invention, it is necessary to allow the organic acid compound as a vulcanization accelerator to exhibit its function sufficiently. Therefore, it is preferable that not less than 50 mole % of the organic acid compounds contained in the rubber composition at the first kneading stage is stearic acid. Further, when the rubber component (A) comprises at least one selected from an emulsion-polymerized styrene-butadiene copolymer and a natural rubber, it is preferable that not less than 50 mole % of the organic acid compound (E) contained in the rubber composition at the first kneading stage is at least one compound selected from rosin acid and fatty acid which are contained in at least one selected from the emulsion-polymerized styrene-butadiene copolymer and the natural rubber. The rosin acid (including a modified rosin acid) and fatty acid contained in the emulsion-polymerized styrene-butadiene copolymer are those derived from an emulsifying agent required for the polymerization to prepare the emulsion-polymerized styrene-butadiene copolymer. Furthermore, the natural rubber usually comprises a small amount of fatty acid.

In the process for preparing the rubber composition of the present invention, various compounding agents usually blended to the rubber composition such as a vulcanization activator such as zinc oxide and an antioxidant are subjected to kneading at the first kneading stage or the final kneading stage or at the intermediate stage between the first kneading stage and the final kneading stage according to necessity. Examples of the kneading machine used in the preparation process of the present invention include a Banbury mixer, rolls, an intensive mixer, a kneader, a biaxial extruder, and the like.

<Pneumatic tire>

The tire of the present invention can be produced by a usual method using the rubber composition of the present invention. Namely a mixture prepared by adequately compounding the above-mentioned components as required is kneaded and is extruded into a shape of each member of a tire in its unvulcanized state, and further, the obtained extruded product is molded to form an unvulcanized tire on a tire molding machine by a usual forming method. Then a tire can be produced by heating and pressurizing the unvulcanized tire in a vulcanizer, and by filling air in the tire, a pneumatic tire can be obtained.

Herein, the number of carbon atoms of the hydrocarbon groups (alkyl group, alkenyl group, alkynyl group, and the like) is preferably 1 to 20, more preferably 1 to 10, further preferably 1 to 4, most preferably 1 unless specified otherwise.

EXAMPLE

The present invention is explained by means of Examples, but is not limited to only the Examples.

Various kinds of chemicals used herein are collectively shown below. Each of the chemicals was subjected to refining by a usual method according to necessity.

<Various chemicals used for preparation of rubber composition>

NR (natural rubber): RSS#3

SBR1 (styrene-butadiene rubber): Nipol NS116R (emulsion-polymerized SBR, bonded styrene content: 22% by mass, vinyl bond content: 65% by mass, Tg=-25°C) available from ZEON CORPORATION

SBR2 (styrene-butadiene rubber): SLR6430 (high styrene, linear, polymer type non-modified SBR, bonded styrene content: 40% by mass, vinyl content: 14% by mass, Mw: 2000000, Mn: 1900000, Mw/Mn=1.05) available from Dow Corning

BR1 (butadiene rubber): BR150B (cis-1,4 bond content=97% by mass, $ML_{1+4}$(100°C)=40, viscosity of a 5% toluene solution at 25°C=48, Mw/Mn=3.3) available from Ube Industries, Ltd.

BR2 (butadiene rubber): BR730 (high molecular weight high cis BR synthesized with Nd catalyst, cis content: 97% by mass, trans content: 2% by mass, vinyl content: 1% by mass, Mw=600000, Mn=300000, Tcp=190, $ML_{1+4}$(100°C)=51) available from JSR Corporation

BR3 (butadiene rubber): BR150L (cis-1,4 bond content=98% by mass, $ML_{1+4}$(100°C)=43, Mw=$60\times10^4$, Mw/Mn=4.3) available from Ube Industries, Ltd.

Silica 1: ULTRASIL VN3 ($N_2SA$: 170 $m^2/g$) available from EVONIK-DEGUSSA

Silica 2: Zeosil Premium 200MP (CTAB specific surface area: 200 $m^2/g$, BET specific surface area: 220 $m^2/g$, average primary particle size: 10 nm, aggregate size: 65 nm) available from Rhodia

Silane coupling agent 1: Si75 (bis(3-triethoxysilylpropyl)polysulfide having an average number of Ss of 2.4 in one molecule) available from EVONIK-DEGUSSA

Silane coupling agent 2: NXT Low-V Silane (a compound represented by the above-mentioned general formula (V)) available from Momentive Performance Materials

Silane coupling agent 3: NXT-Z45 (a compound represented by the above-mentioned general formula (VII), in which a molar ratio of x:y is 55:45) available from Momentive Performance Materials Silane coupling agent 4: Si363 (a compound represented by the following formula) available from EVONIK-DEGUSSA

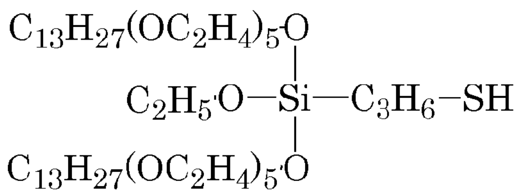

Silane coupling agent 5: Si69 (bis(3-triethoxysilylpropyl)tetrasulfide, molecular weight=539) available from EVONIK-DEGUSSA

Carbon black: N110 ($N_2SA$: 130 $m^2/g$) available from SHOWA CABOT K.K.

Oil: X-140 available from JX Nippon Oil & Energy Corporation

Wax: SUNNOC wax available from OUCHI SHINKO CHEMICAL INDUSTRIAL CO., LTD.

Antioxidant: ANTIGENE 6C (N-(1,3-dimethylbutyl)-N'-phenyl-p-phenylenediamine) available from Sumitomo Chemical Company, Limited

Stearic acid: Stearic acid "Kiri" available from NOF CORPORATION Zinc oxide: Zinc oxide 1 available from MITSUI MINING & SMELTING CO., LTD.

Peptizing agent 1: NOCTIZER SS (o,o'-dibenzamidodiphenyl disulfide, molecular weight=456.58) available from OUCHI SHINKO CHEMICAL INDUSTRIAL CO., LTD.

Peptizing agent 2: NOCTIZER SZ (zinc o-benzamidothiophenate, molecular weight=521.97) available from OUCHI SHINKO CHEMICAL INDUSTRIAL CO., LTD.

Peptizing agent 3: NOCTIZER SD (a mixture of o,o'-dibenzamidodiphenyl disulfide:stearic acid=22:78) available from OUCHI SHINKO CHEMICAL INDUSTRIAL CO., LTD.

Peptizing agent 4: Dixylyldisulfide

Peptizing agent 5: 2-Thionaphthol

Peptizing agent 6: Dicumyl peroxide

Sulfur: Sulfur powder available from TSURUMI CHEMICAL INDUSTRY CO., LTD.

Vulcanization accelerator 1: NOCCELER NS (N-tert-butyl-2-benzothiazolylsulfenamide) available from OUCHI SHINKO CHEMICAL INDUSTRIAL CO., LTD.
Vulcanization accelerator 2: NOCCELER D (N,N'-diphenylguanidine) available from OUCHI SHINKO CHEMICAL INDUSTRIAL CO., LTD.

<Preparation of rubber composition for tire>

(First kneading stage)

Each of the chemicals was kneaded in accordance with the compounding formulation shown in X-kneading of each Table (all of the compounding amounts are shown in a unit of part by mass) for five minutes using a 1.7-liter Banbury mixer manufactured by Kobe Steel, Ltd., and a discharge temperature was set to 160°C. Thus, a kneaded product was obtained.

Next, with respect to Examples and Comparative Examples other than Examples 1 to 13 and 17 to 21 and Comparative Examples 1 and 2, to the obtained kneaded products was added each of chemicals in accordance with the compounding formulation shown in Y-kneading of each Table, followed by kneading for four minutes using a 1.7-liter Banbury mixer manufactured by Kobe Steel, Ltd., and a discharge temperature was set to 155°C. Thus, a kneaded product was obtained.

In each of Tables, "a period of time (S) until a peptizing agent is added after addition of a silane coupling agent" and "a temperature (°C) of a rubber composition when a peptizing agent is added" are a period of time and a temperature of X-kneading in Examples 1 to 13 and 17 to 21, and are a period of time and a temperature of Y-kneading in Examples 14 to 16 and 22 to 57.

(Final kneading stage)

Furthermore, to the obtained kneaded product was added each of the chemicals in accordance with the compounding formulation shown in the final stage (finish-kneading) of each Table, followed by kneading at 80°C for five minutes using an open roll, and thus, an unvulcanized rubber composition was obtained.

The obtained unvulcanized rubber composition was subjected to press vulcanization at 170°C for twenty minutes using a 0.5 mm thick mold, and a vulcanized rubber composition was obtained.

(Index of processability)

With respect to each of the unvulcanized rubber compositions, sensory evaluation of smoothness of a rubber sheet after processing with rolls was performed with naked eyes. The following evaluation items were evaluated on the basis of 5 points, on the assumption that the evaluation point of a Reference Comparative Example is 3 (For the Reference Comparative Examples, see the explanation described later). The larger the point is, the more excellent the processability is.

Evaluation items: Smoothness of surface and edges

(Index of fuel efficiency)

Each of vulcanized rubber compositions was cut into test pieces, and a loss tangent (tanδ) of the vulcanized rubber sheet at 30°C was measured under the conditions of an initial strain of 10%, a dynamic strain of 2% and a frequency of 10 Hz using a viscoelasticity spectrometer available from Ueshima Seisakusho Co., Ltd. A tanδ of each formulation was indicated with an index obtained by the following equation on the assumption that the index of fuel efficiency of the Reference Comparative Example is 100. The larger the index of fuel efficiency is, the more excellent the fuel efficiency is.

$$\text{(Index of fuel efficiency)} = \text{(Tan}\delta\text{ of Reference Comparative Example)} \div \text{(Tan}\delta\text{ of each formulation)} \times 100$$

(Index of abrasion resistance)

Each of vulcanized rubber compositions was cut into test pieces, and a volume loss of each vulcanized rubber composition was measured under the conditions of a load of 50 N, a speed of 20 km/h and a slip angle of 5° using an

LAT tester (laboratory abrasion and skid tester). A volume loss of each formulation was indicated with an index obtained by the following equation on the assumption that the index of abrasion resistance of the Reference Comparative Example is 100. The larger the index of abrasion resistance is, the more excellent the abrasion resistance is.

$$\text{(Index of abrasion resistance)} = \text{(Volume loss of Reference Comparative Example)} \div \text{(Volume loss of each formulation)} \times 100$$

Each of Reference Comparative Examples is Comparative Example 1 in Table 1 (Examples 1 to 21 and Comparative Examples 1 to 6); Comparative Example 7 in Table 2 (Examples 22 to 24 and Comparative Examples 7 to 11); Comparative Example 12 in Table 3 (Examples 25 to 28 and Comparative Examples 12 to 17); Comparative Example 18 in Table 4 (Examples 29 to 31 and Comparative Examples 18 to 21); Comparative Example 22 in Table 5 (Examples 32 to 34 and Comparative Examples 22 to 26); Comparative Example 27 in Table 6 (Examples 35 to 39 and Comparative Examples 27 to 32); Comparative Example 33 in Table 7 (Examples 40 to 42 and Comparative Examples 33 to 36); Comparative Example 37 in Table 8 (Examples 43 to 45 and Comparative Examples 37 to 41); Comparative Example 42 in Table 9 (Examples 46 to 48 and Comparative Examples 42 to 46); Comparative Example 47 in Table 10 (Examples 49 to 51 and Comparative Examples 47 to 50); Comparative Example 51 in Table 11 (Examples 52 to 54 and Comparative Examples 51 to 55); and Comparative Example 56 in Table 12 (Examples 55 to 57 and Comparative Examples 56 to 60).

The results of the above-mentioned evaluations are shown in Tables 1 to 12.

Table 1

| | Examples | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Compounding components | | | | | | | | | | | | | | |
| 1st stage | | | | | | | | | | | | | | |
| X-kneading | | | | | | | | | | | | | | |
| NR | 25 | 25 | 25 | 25 | 25 | 25 | 25 | 25 | 25 | 25 | 25 | 25 | 25 | 25 |
| SBR1 | 45 | 45 | 45 | 45 | 45 | 45 | 45 | 45 | 45 | 45 | 45 | 45 | 45 | 45 |
| BR1 | 30 | 30 | 30 | 30 | 30 | 30 | 30 | 30 | 30 | 30 | 30 | 30 | 30 | 30 |
| Silica 1 | 80 | 80 | 80 | 80 | 80 | 80 | 80 | 80 | 80 | 80 | 80 | 80 | 80 | 50 |
| Silane coupling agent 1 | 6.4 | 6.4 | 6.4 | 6.4 | 6.4 | 6.4 | 6.4 | 6.4 | 6.4 | 6.4 | 6.4 | 6.4 | 6.4 | 4 |
| Carbon black | 15 | 15 | 15 | 15 | 15 | 15 | 15 | 15 | 15 | 15 | 15 | 15 | 15 | 15 |
| Oil | 25 | 25 | 25 | 25 | 25 | 25 | 25 | 25 | 25 | 25 | 25 | 25 | 25 | 25 |
| Wax | 1 | 1 | 1 | 1 | 1 | 1 | 1 | 1 | 1 | 1 | 1 | 1 | 1 | 1 |
| Antioxidant | - | - | - | - | - | - | - | - | - | - | - | - | - | - |
| Stearic acid | - | - | - | - | - | - | - | - | - | - | - | - | - | - |
| Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 |
| Peptizing agent 1 | 2 | - | 0.1 | 0.3 | 1 | 3 | - | - | - | - | - | - | - | - |
| Peptizing agent 2 | - | 2 | - | - | - | - | 0.1 | 0.3 | 1 | 3 | - | - | - | - |
| Peptizing agent 3 | - | - | - | - | - | - | - | - | - | - | 2 | 4 | 5 | - |
| Y-kneading | | | | | | | | | | | | | | |
| Silica 1 | - | - | - | - | - | - | - | - | - | - | - | - | - | 30 |
| Silane coupling agent 1 | - | - | - | - | - | - | - | - | - | - | - | - | - | 2.4 |
| Peptizing agent 1 | - | - | - | - | - | - | - | - | - | - | - | - | - | 2 |
| Peptizing agent 2 | - | - | - | - | - | - | - | - | - | - | - | - | - | - |
| Peptizing agent 3 | - | - | - | - | - | - | - | - | - | - | - | - | - | - |

| | Examples | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Compounding components | | | | | | | | | | | | | | |
| Final stage | | | | | | | | | | | | | | |
| Antioxidant | 1.5 | 1.5 | 1.5 | 1.5 | 1.5 | 1.5 | 1.5 | 1.5 | 1.5 | 1.5 | 1.5 | 1.5 | 1.5 | 1.5 |
| Stearic acid | 2 | 2 | 2 | 2 | 2 | 2 | 2 | 2 | 2 | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 | 2 | 2 | 2 | 2 |
| Vulcanization accelerator 2 | 1 | 1 | 1 | 1 | 1 | 1 | 1 | 1 | 1 | 1 | 1 | 1 | 1 | 1 |
| Period of time until addition of a peptizing agent is initiated after addition of a silane coupling agent (s) | 90 | 90 | 90 | 90 | 90 | 90 | 90 | 90 | 90 | 90 | 90 | 90 | 90 | 90 |
| Temperature of a rubber composition when a peptizing agent is added (°C) | 130 | 130 | 130 | 130 | 130 | 130 | 130 | 130 | 130 | 130 | 130 | 130 | 130 | 130 |
| Evaluation | | | | | | | | | | | | | | |
| Index of processability | 4 | 4 | 3 | 3 | 4 | 5 | 3 | 3 | 4 | 4 | 3 | 4 | 5 | 4 |
| Index of fuel efficiency | 135 | 130 | 107 | 114 | 124 | 136 | 105 | 111 | 120 | 133 | 116 | 122 | 124 | 137 |
| Index of abrasion resistance | 106 | 104 | 102 | 102 | 103 | 105 | 102 | 102 | 103 | 106 | 102 | 103 | 104 | 108 |

| | Examples | | | | | | | Comparative Examples | | | | | |
|---|---|---|---|---|---|---|---|---|---|---|---|---|---|
| | 15 | 16 | 17 | 18 | 19 | 20 | 21* | 1 | 2 | 3 | 4 | 5 | 6 |
| Compounding components | | | | | | | | | | | | | |
| 1st stage | | | | | | | | | | | | | |
| X-kneading | | | | | | | | | | | | | |
| NR | 25 | 25 | 25 | 25 | 25 | 25 | 25 | 25 | 25 | 25 | 25 | 25 | 25 |
| SBR1 | 45 | 45 | 45 | 45 | 45 | 45 | 45 | 45 | 45 | 45 | 45 | 45 | 45 |
| BR1 | 30 | 30 | 30 | 30 | 30 | 30 | 30 | 30 | 30 | 30 | 30 | 30 | 30 |
| Silica 1 | 50 | 50 | 80 | 80 | 80 | 80 | 80 | 80 | 80 | 50 | 50 | 50 | 50 |
| Silane coupling agent 1 | 4 | 4 | 6.4 | 6.4 | 6.4 | 6.4 | 6.4 | 6.4 | 6.4 | 4 | - | - | - |
| Carbon black | 15 | 15 | 15 | 15 | 15 | 15 | 15 | 15 | 15 | 15 | 15 | 15 | 15 |
| Oil | 25 | 25 | 25 | 25 | 25 | 25 | 25 | 25 | 25 | 25 | 25 | 25 | 25 |
| Wax | 1 | 1 | 1 | 1 | 1 | 1 | 1 | 1 | 1 | 1 | 1 | 1 | 1 |
| Antioxidant | - | - | - | - | - | - | - | 1.5 | - | - | - | - | - |
| Stearic acid | - | - | - | - | - | - | - | 2 | - | - | - | - | - |
| Zinc oxide | 2.5 | 2.5 | 2.5 | 2.5 | 2.5 | 2.5 | 2.5 | 2.5 | 2.5 | 2.5 | 2.5 | 2.5 | 2.5 |
| Peptizing agent 1 | - | - | 2 | 2 | 2 | 2 | 2 | - | - | - | 2 | - | - |
| Peptizing agent 2 | - | - | - | - | - | - | - | - | - | - | - | 2 | - |
| Peptizing agent 3 | - | - | - | - | - | - | - | - | - | - | - | - | 4 |
| Y-kneading | | | | | | | | | | | | | |
| Silica 1 | 30 | 30 | - | - | - | - | - | - | - | 30 | 30 | 30 | 30 |
| Silane coupling agent 1 | 2.4 | 2.4 | - | - | - | - | - | - | - | 2.4 | 6.4 | 6.4 | 6.4 |
| Peptizing agent 1 | - | - | - | - | - | - | - | - | - | - | - | - | - |
| Peptizing agent 2 | 2 | - | - | - | - | - | - | - | - | - | - | - | - |
| Peptizing agent 3 | - | 4 | - | - | - | - | - | - | - | - | - | - | - |

| | Examples | | | | | | | Comparative Examples | | | | | |
|---|---|---|---|---|---|---|---|---|---|---|---|---|---|
| | 15 | 16 | 17 | 18 | 19 | 20 | 21* | 1 | 2 | 3 | 4 | 5 | 6 |
| Compounding components | | | | | | | | | | | | | |
| Final stage | | | | | | | | | | | | | |
| Antioxidant | 1.5 | 1.5 | 1.5 | 1.5 | 1.5 | 1.5 | 1.5 | - | 1.5 | 1.5 | 1.5 | 1.5 | 1.5 |
| Stearic acid | 2 | 2 | 2 | 2 | 2 | 2 | 2 | - | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 | 2 | 2 | 2 |
| Vulcanization accelerator 2 | 1 | 1 | 1 | 1 | 1 | 1 | 1 | 1 | 1 | 1 | 1 | 1 | 1 |
| Period of time until addition of a peptizing agent is initiated after addition of a silane coupling agent (s) | 90 | 90 | 150 | 120 | 60 | 30 | 0 | - | - | - | - | - | - |
| Temperature of a rubber composition when a peptizing agent is added (°C) | 130 | 130 | 165 | 150 | 115 | 95 | 75 | - | - | - | - | - | - |
| Evaluation | | | | | | | | | | | | | |
| Index of processability | 4 | 4 | 3 | 3 | 4 | 3 | 3 | 3 | 2 | 3 | 3 | 3 | 3 |
| Index of fuel efficiency | 132 | 124 | 116 | 126 | 128 | 121 | 114 | 100 | 102 | 103 | 103 | 102 | 102 |
| Index of abrasion resistance | 106 | 104 | 101 | 103 | 104 | 102 | 100 | 100 | 101 | 101 | 101 | 101 | 101 |

* Example 21 is not according to the present invention

Table 2

| | Examples | | | Comparative Examples | | | | |
|---|---|---|---|---|---|---|---|---|
| | 22 | 23 | 24 | 7 | 8 | 9 | 10 | 11 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |

(continued)

| | Examples | | | Comparative Examples | | | | |
|---|---|---|---|---|---|---|---|---|
| | 22 | 23 | 24 | 7 | 8 | 9 | 10 | 11 |
| Compounding components | | | | | | | | |
| 1st stage | | | | | | | | |
| X-kneading | | | | | | | | |
| Silica 1 | 50 | 50 | 50 | 50 | 50 | 50 | 50 | 50 |
| Silica 2 | - | - | - | - | - | - | - | - |
| Silane coupling agent 1 | 4 | 4 | 4 | 4 | 4 | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| Antioxidant | - | - | - | 1.5 | - | - | - | - |
| Stearic acid | - | - | - | 2 | - | - | - | - |
| Zinc oxide | 2.5 | 2.5 | 2.5 | 2.5 | 2.5 | 2.5 | 2.5 | 2.5 |
| Peptizing agent 1 | - | - | - | - | - | 2 | - | - |
| Peptizing agent 2 | - | - | - | - | - | - | 2 | - |
| Peptizing agent 3 | - | - | - | - | - | - | - | 4 |
| Y-kneading | | | | | | | | |
| Silica 1 | 30 | 30 | 30 | 30 | 30 | 30 | 30 | 30 |
| Silica 2 | - | - | - | - | - | - | - | - |
| Silane coupling agent 1 | 2.4 | 2.4 | 2.4 | 2.4 | 2.4 | 6.4 | 6.4 | 6.4 |
| Peptizing agent 1 | 2 | - | - | - | - | - | - | - |
| Peptizing agent 2 | - | 2 | - | - | - | - | - | - |
| Peptizing agent 3 | - | - | 4 | - | - | - | - | - |
| Final stage | | | | | | | | |
| Antioxidant | 1.5 | 1.5 | 1.5 | - | 1.5 | 1.5 | 1.5 | 1.5 |
| Stearic acid | 2 | 2 | 2 | - | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |
| Evaluation | | | | | | | | |
| Index of processability | 5 | 4 | 5 | 3 | 2 | 4 | 3 | 4 |
| Index of fuel efficiency | 139 | 134 | 126 | 100 | 101 | 102 | 101 | 102 |
| Index of abrasion resistance | 109 | 107 | 105 | 100 | 101 | 101 | 101 | 101 |

Table 3

| | Examples | | | | Comparative Examples | | | | | |
|---|---|---|---|---|---|---|---|---|---|---|
| | 25 | 26 | 27 | 28 | 12 | 13 | 14 | 15 | 16 | 17 |
| Compounding components | | | | | | | | | | |
| 1st stage | | | | | | | | | | |
| X-kneading | | | | | | | | | | |
| NR | 25 | 25 | 25 | 25 | 25 | 25 | 25 | 25 | 25 | 25 |
| SBR1 | - | - | - | | - | - | - | - | - | |
| SBR2 | 45 | 45 | 45 | 45 | 45 | 45 | 45 | 45 | 45 | 45 |
| BR1 | - | - | - | | - | - | - | - | - | |
| BR2 | 30 | 30 | 30 | | 30 | 30 | 30 | 30 | 30 | |
| BR3 | - | - | - | 30 | - | - | - | - | - | 30 |
| Silica 1 | 50 | 50 | 50 | 50 | 50 | 50 | 50 | 50 | 50 | 50 |
| Silica 2 | - | - | - | - | - | - | - | - | - | - |
| Silane coupling agent 1 | 4 | 4 | 4 | 4 | 4 | 4 | - | - | - | - |
| Carbon black | 15 | 15 | 15 | 15 | 15 | 15 | 15 | 15 | 15 | 15 |
| Oil | 25 | 25 | 25 | 25 | 25 | 25 | 25 | 25 | 25 | 25 |
| Wax | 1 | 1 | 1 | 1 | 1 | 1 | 1 | 1 | 1 | 1 |
| Antioxidant | - | - | - | - | 1.5 | - | - | - | - | - |
| Stearic acid | - | - | - | - | 2 | - | - | - | - | - |
| Zinc oxide | 2.5 | 2.5 | 2.5 | 2.5 | 2.5 | 2.5 | 2.5 | 2.5 | 2.5 | 2.5 |
| Peptizing agent 1 | - | - | - | - | - | - | 2 | - | - | 2 |
| Peptizing agent 2 | - | - | - | - | - | - | - | 2 | - | - |
| Peptizing agent 3 | - | - | - | - | - | - | - | - | 4 | - |
| Y-kneading | | | | | | | | | | |
| Silica 1 | 30 | 30 | 30 | 30 | 30 | 30 | 30 | 30 | 30 | 30 |
| Silica 2 | - | - | - | - | - | - | - | - | - | - |
| Silane coupling agent 1 | 2.4 | 2.4 | 2.4 | 2.4 | 2.4 | 2.4 | 6.4 | 6.4 | 6.4 | 6.4 |
| Peptizing agent 1 | 2 | - | - | 2 | - | - | - | - | - | - |
| Peptizing agent 2 | - | 2 | - | - | - | - | - | - | - | - |
| Peptizing agent 3 | - | - | 4 | - | - | - | - | - | - | - |
| | Examples | | | | Comparative Examples | | | | | |
| | 25 | 26 | 27 | 28 | 12 | 13 | 14 | 15 | 16 | 17 |
| Compounding components | | | | | | | | | | |
| Final stage | | | | | | | | | | |
| Antioxidant | 1.5 | 1.5 | 1.5 | 1.5 | - | 1.5 | 1.5 | 1.5 | 1.5 | 1.5 |
| Stearic acid | 2 | 2 | 2 | 2 | - | 2 | 2 | 2 | 2 | 2 |
| Sulfur | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 |
| Vulcanization accelerator 2 | 1 | 1 | 1 | 1 | 1 | 1 | 1 | 1 | 1 | 1 |
| Period of time until addition of a peptizing agent is initiated after addition of a silane coupling agent (s) | 90 | 90 | 90 | 90 | - | - | - | - | - | - |
| Temperature of a rubber composition when a peptizing agent is added (°C) | 130 | 130 | 130 | 130 | - | - | - | - | - | - |

(continued)

| Evaluation | | | | | | | | | | |
|---|---|---|---|---|---|---|---|---|---|---|
| Index of processability<br>Index of fuel efficiency<br>Index of abrasion resistance | 4<br>140<br>110 | 4<br>135<br>108 | 4<br>127<br>106 | 3<br>138<br>108 | 3<br>100<br>100 | 3<br>100<br>100 | 3<br>101<br>101 | 2<br>100<br>100 | 3<br>102<br>101 | 3<br>102<br>101 |

Table 4

| | Examples | | | Com. Ex. | | | |
|---|---|---|---|---|---|---|---|
| | 29 | 30 | 31 | 18 | 19 | 20 | 21 |
| Compounding components | | | | | | | |
| 1st stage | | | | | | | |
| X-kneading | | | | | | | |
| NR | 25 | 25 | 25 | 25 | 25 | 25 | 25 |
| SBR1 | 45 | 45 | 45 | 45 | 45 | 45 | 45 |
| SBR2 | - | - | - | - | - | - | - |
| BR1 | 30 | 30 | 30 | 30 | 30 | 30 | 30 |
| BR2 | - | - | - | - | - | - | - |
| BR3 | - | - | - | - | - | - | - |
| Silica 1 | - | - | - | - | - | - | - |
| Silica 2 | 50 | 50 | 50 | 50 | 50 | 50 | 50 |
| Silane coupling agent 1 | 4 | 4 | 4 | 4 | - | - | - |
| Carbon black | 15 | 15 | 15 | 15 | 15 | 15 | 15 |
| Oil | 25 | 25 | 25 | 25 | 25 | 25 | 25 |
| Wax | 1 | 1 | 1 | 1 | 1 | 1 | 1 |
| Antioxidant | - | - | - | 1.5 | - | - | - |
| Stearic acid | - | - | - | 2 | - | - | - |
| Zinc oxide | 2.5 | 2.5 | 2.5 | 2.5 | 2.5 | 2.5 | 2.5 |
| Peptizing agent 1 | - | - | - | - | 2 | - | - |
| Peptizing agent 2 | - | - | - | - | - | 2 | - |
| Peptizing agent 3 | - | - | - | - | - | - | 4 |
| Y-kneading | | | | | | | |
| Silica 1 | - | - | - | - | - | - | - |
| Silica 2 | 30 | 30 | 30 | 30 | 30 | 30 | 30 |
| Silane coupling agent 1 | 2.4 | 2.4 | 2.4 | 2.4 | 6.4 | 6.4 | 6.4 |
| Peptizing agent 1 | 2 | - | - | - | - | - | - |
| Peptizing agent 2 | - | 2 | - | - | - | - | - |
| Peptizing agent 3 | - | - | 4 | - | - | - | - |
| Final stage | | | | | | | |
| Antioxidant | 1.5 | 1.5 | 1.5 | - | 1.5 | 1.5 | 1.5 |
| Stearic acid | 2 | 2 | 2 | - | 2 | 2 | 2 |
| Sulfur | 1.5 | 1.5 | 1.5 | 1.5 | 1.5 | 1.5 | 1.5 |
| Vulcanization accelerator 1 | 2 | 2 | 2 | 2 | 2 | 2 | 2 |
| Vulcanization accelerator 2 | 1 | 1 | 1 | 1 | 1 | 1 | 1 |
| Period of time until addition of a peptizing agent is initiated after addition of a silane coupling agent (s) | 90 | 90 | 90 | - | - | - | - |

(continued)

| | | | | | | | |
|---|---|---|---|---|---|---|---|
| Final stage | | | | | | | |
| Temperature of a rubber composition when a peptizing agent is added (°C) | 130 | 130 | 130 | - | - | - | - |
| Evaluation | | | | | | | |
| Index of processability | 4 | 4 | 4 | 3 | 2 | 2 | 3 |
| Index of fuel efficiency | 140 | 135 | 127 | 100 | 101 | 101 | 102 |
| Index of abrasion resistance | 110 | 108 | 106 | 100 | 101 | 101 | 101 |

Table 5

| | Examples | | | Comparative Examples | | | | |
|---|---|---|---|---|---|---|---|---|
| | 32 | 33 | 34 | 22 | 23 | 24 | 25 | 26 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |
| Silica 1 | 50 | 50 | 50 | 50 | 50 | 50 | 50 | 50 |
| Silica 2 | - | - | - | - | - | - | - | - |
| Silane coupling agent 1 | - | - | - | - | - | - | - | - |
| Silane coupling agent 2 | 2.5 | 2.5 | 2.5 | 2.5 | 2.5 | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| Antioxidant | - | - | - | 1.5 | - | - | - | - |
| Stearic acid | - | - | - | 2 | - | - | - | - |
| Zinc oxide | 2.5 | 2.5 | 2.5 | 2.5 | 2.5 | 2.5 | 2.5 | 2.5 |
| Peptizing agent 1 | - | - | - | - | - | 2 | - | - |
| Peptizing agent 2 | - | - | - | - | - | - | 2 | - |
| Peptizing agent 3 | - | - | - | - | - | - | - | 4 |
| Y-kneading | | | | | | | | |
| Silica 1 | 30 | 30 | 30 | 30 | 30 | 30 | 30 | 30 |
| Silica 2 | - | - | - | - | - | - | - | - |
| Silane coupling agent 2 | 1.5 | 1.5 | 1.5 | 1.5 | 1.5 | 4 | 4 | 4 |
| Peptizing agent 1 | 2 | - | - | - | - | - | - | - |
| Peptizing agent 2 | - | 2 | - | - | - | - | - | - |
| Peptizing agent 3 | - | - | 4 | - | - | - | - | - |
| Final stage | | | | | | | | |
| Antioxidant | 1.5 | 1.5 | 1.5 | - | 1.5 | 1.5 | 1.5 | 1.5 |
| Stearic acid | 2 | 2 | 2 | - | 2 | 2 | 2 | 2 |
| Sulfur | 1.5 | 1.5 | 1.5 | 1.5 | 1.5 | 1.5 | 1.5 | 1.5 |

(continued)

| | | | | | | | | |
|---|---|---|---|---|---|---|---|---|
| Final stage | | | | | | | | |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |
| Evaluation | | | | | | | | |
| Index of processability | 5 | 4 | 5 | 3 | 2 | 4 | 3 | 4 |
| Index of fuel efficiency | 138 | 133 | 125 | 100 | 101 | 102 | 101 | 102 |
| Index of abrasion resistance | 108 | 106 | 104 | 100 | 100 | 102 | 101 | 101 |

Table 6

| | Example | | | | | Comparative Example | | | | | |
|---|---|---|---|---|---|---|---|---|---|---|---|
| | 35 | 36 | 37 | 38 | 39 | 27 | 28 | 29 | 30 | 31 | 32 |
| Compounding components | | | | | | | | | | | |
| 1st stage | | | | | | | | | | | |
| X-kneading | | | | | | | | | | | |
| NR | 25 | 25 | 25 | 25 | 25 | 25 | 25 | 25 | 25 | 25 | 25 |
| SBR1 | - | - | - | - | - | - | - | - | - | - | - |
| SBR2 | 45 | 45 | 45 | 45 | 45 | 45 | 45 | 45 | 45 | 45 | 45 |
| BR1 | - | - | - | - | - | - | - | - | - | - | - |
| BR2 | 30 | 30 | 30 | - | 30 | 30 | 30 | 30 | 30 | 30 | - |
| BR3 | - | - | - | 30 | - | - | - | - | - | - | 30 |
| Silica 1 | 50 | 50 | 50 | 50 | 50 | 50 | 50 | 50 | 80 | 80 | 80 |
| Silica 2 | - | - | - | - | - | - | - | - | - | - | - |
| Silane coupling agent 1 | - | - | - | - | 4 | - | - | - | - | - | - |
| Silane coupling agent 2 | 2.5 | 2.5 | 2.5 | 2.5 | - | 2.5 | 2.5 | - | - | - | -- |
| Carbon black | 15 | 15 | 15 | 15 | 15 | 15 | 15 | 15 | 15 | 15 | 15 |
| Oil | 25 | 25 | 25 | 25 | 25 | 25 | 25 | 25 | 25 | 25 | 25 |
| Wax | 1 | 1 | 1 | 1 | 1 | 1 | 1 | 1 | 1 | 1 | 1 |
| Antioxidant | - | - | - | - | - | 1.5 | - | - | - | - | - |
| Stearic acid | - | - | - | - | - | 2 | - | - | - | - | - |
| Zinc oxide | 2.5 | 2.5 | 2.5 | 2.5 | 2.5 | 2.5 | 2.5 | 2.5 | 2.5 | 2.5 | 2.5 |
| Peptizing agent 1 | - | - | - | - | - | - | - | 2 | - | - | 2 |
| Peptizing agent 2 | - | - | - | - | - | - | - | - | 2 | - | - |
| Peptizing agent 3 | - | - | - | - | - | - | - | - | - | 4 | - |
| Y-kneading | | | | | | | | | | | |
| Silica 1 | 30 | 30 | 30 | 30 | 30 | 30 | 30 | 30 | 30 | 30 | 30 |
| Silica 2 | - | - | - | - | - | - | - | - | - | - | - |
| Silane coupling agent 2 | 1.5 | 1.5 | 1.5 | 1.5 | 1.5 | 1.5 | 1.5 | 4 | 4 | 4 | 4 |
| Peptizing agent 1 | 2 | - | - | 2 | 2 | - | - | - | - | - | - |
| Peptizing agent 2 | - | 2 | - | - | - | - | - | - | - | - | - |
| Peptizing agent 3 | - | - | 4 | - | - | - | - | - | - | - | - |

(continued)

| | Examples | | | | | Comparative Examples | | | | | |
|---|---|---|---|---|---|---|---|---|---|---|---|
| | 35 | 36 | 37 | 38 | 39 | 27 | 28 | 29 | 30 | 31 | 32 |
| Compounding components | | | | | | | | | | | |
| Final stage | | | | | | | | | | | |
| Antioxidant | 1.5 | 1.5 | 1.5 | 1.5 | 1.5 | - | 1.5 | 1.5 | 1.5 | 1.5 | 1.5 |
| Stearic acid | 2 | 2 | 2 | 2 | 2 | - | 2 | 2 | 2 | 2 | 2 |
| Sulfur | 1.5 | 1.5 | 1.5 | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 | 2 | 2 | 2 |
| Vulcanization accelerator 2 | 1 | 1 | 1 | 1 | 1 | 1 | 1 | 1 | 1 | 1 | 1 |
| Period of time until addition of a peptizing agent is initiated after addition of a silane coupling agent (s) | 90 | 90 | 90 | 90 | 90 | - | - | - | - | - | |
| Temperature of a rubber composition when a peptizing agent is added (°C) | 130 | 130 | 130 | 130 | 130 | - | - | - | - | - | |
| Evaluation | | | | | | | | | | | |
| Index of processability | 4 | 4 | 4 | 3 | 3 | 3 | 3 | 3 | 2 | 3 | 3 |
| Index of fuel efficiency | 139 | 134 | 126 | 137 | 142 | 100 | 100 | 101 | 101 | 102 | 101 |
| Index of abrasion resistance | 109 | 107 | 105 | 107 | 111 | 100 | 101 | 101 | 101 | 101 | 101 |

Table 7

| | Examples | | | Com. Ex. | | | |
|---|---|---|---|---|---|---|---|
| | 40 | 41 | 42 | 33 | 34 | 35 | 36 |
| Compounding components | | | | | | | |
| 1st stage | | | | | | | |
| X-kneading | | | | | | | |
| NR | 25 | 25 | 25 | 25 | 25 | 25 | 25 |
| SBR1 | 45 | 45 | 45 | 45 | 45 | 45 | 45 |
| SBR2 | - | - | - | - | - | - | - |
| BR1 | 30 | 30 | 30 | 30 | 30 | 30 | 30 |
| BR2 | - | - | - | - | - | - | - |
| BR3 | - | - | - | - | - | - | - |
| Silica 1 | - | - | - | - | - | - | - |
| Silica 2 | 50 | 50 | 50 | 50 | 50 | 50 | 50 |
| Silane coupling agent 1 | - | - | - | - | - | - | - |
| Silane coupling agent 2 | 2.5 | 2.5 | 2.5 | 2.5 | - | - | - |
| Carbon black | 15 | 15 | 15 | 15 | 15 | 15 | 15 |
| Oil | 25 | 25 | 25 | 25 | 25 | 25 | 25 |
| Wax | 1 | 1 | 1 | 1 | 1 | 1 | 1 |
| Antioxidant | - | - | - | 1.5 | - | - | - |
| Stearic acid | - | - | - | 2 | - | - | - |
| Zinc oxide | 2.5 | 2.5 | 2.5 | 2.5 | 2.5 | 2.5 | 2.5 |
| Peptizing agent 1 | - | - | - | - | 2 | - | - |
| Peptizing agent 2 | - | - | - | - | - | 2 | - |

(continued)

| | Examples | | | Com. Ex. | | | |
|---|---|---|---|---|---|---|---|
| | 40 | 41 | 42 | 33 | 34 | 35 | 36 |
| Compounding components | | | | | | | |
| 1st stage | | | | | | | |
| X-kneading | | | | | | | |
| Peptizing agent 3 | - | - | - | - | - | - | 4 |
| Y-kneading | | | | | | | |
| Silica 1 | - | - | - | - | - | - | - |
| Silica 2 | 30 | 30 | 30 | 30 | 30 | 30 | 30 |
| Silane coupling agent 2 | 1.5 | 1.5 | 1.5 | 1.5 | 4 | 4 | 4 |
| Peptizing agent 1 | 2 | - | - | - | - | - | - |
| Peptizing agent 2 | - | 2 | - | - | - | - | - |
| Peptizing agent 3 | - | - | 4 | - | - | - | - |
| Final stage | | | | | | | |
| Antioxidant | 1.5 | 1.5 | 1.5 | - | 1.5 | 1.5 | 1.5 |
| Stearic acid | 2 | 2 | 2 | - | 2 | 2 | 2 |
| Sulfur | 1.5 | 1.5 | 1.5 | 1.5 | 1.5 | 1.5 | 1.5 |
| Vulcanization accelerator 1 | 2 | 2 | 2 | 2 | 2 | 2 | 2 |
| Vulcanization accelerator 2 | 1 | 1 | 1 | 1 | 1 | 1 | 1 |
| Period of time until addition of a peptizing agent is initiated after addition of a silane coupling agent (s) | 90 | 90 | 90 | - | - | - | - |
| Temperature of a rubber composition when a peptizing agent is added (°C) | 130 | 130 | 130 | - | - | - | - |
| Evaluation | | | | | | | |
| Index of processability | 4 | 4 | 4 | 3 | 2 | 2 | 3 |
| Index of fuel efficiency | 140 | 135 | 127 | 100 | 101 | 101 | 101 |
| Index of abrasion resistance | 110 | 108 | 106 | 100 | 100 | 101 | 101 |

Table 8

| | Examples | | | Comparative Examples | | | | |
|---|---|---|---|---|---|---|---|---|
| | 43 | 44 | 45 | 37 | 38 | 39 | 40 | 41 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |
| Silica 1 | 50 | 50 | 50 | 50 | 50 | 50 | 50 | 50 |
| Silica 2 | - | - | - | - | - | - | - | - |
| Silane coupling agent 3 | 2.5 | 2.5 | 2.5 | 2.5 | 2.5 | - | - | - |

(continued)

| | Examples | | | Comparative Examples | | | | |
|---|---|---|---|---|---|---|---|---|
| | 43 | 44 | 45 | 37 | 38 | 39 | 40 | 41 |
| Compounding components | | | | | | | | |
| 1st stage | | | | | | | | |
| X-kneading | | | | | | | | |
| Silane coupling agent 4 | - | - | - | - | - | - | - | - |
| Silane coupling agent 5 | - | - | - | - | - | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| Antioxidant | - | - | - | 1.5 | - | - | - | - |
| Stearic acid | - | - | - | 2 | - | - | - | - |
| Zinc oxide | 2.5 | 2.5 | 2.5 | 2.5 | 2.5 | 2.5 | 2.5 | 2.5 |
| Peptizing agent 1 | - | - | - | - | - | 2 | - | - |
| Peptizing agent 2 | - | - | - | - | - | - | 2 | - |
| Peptizing agent 3 | - | - | - | - | - | - | - | 4 |
| Y-kneading | | | | | | | | |
| Silica 1 | 30 | 30 | 30 | 30 | 30 | 30 | 30 | 30 |
| Silica 2 | - | - | - | - | - | - | - | - |
| Silane coupling agent 3 | 1.5 | 1.5 | 1.5 | 1.5 | 1.5 | 4 | 4 | 4 |
| Silane coupling agent 4 | - | - | - | - | - | - | - | - |
| Silane coupling agent 5 | - | - | - | - | - | - | - | - |
| Peptizing agent 1 | 2 | - | - | - | - | - | - | - |
| Peptizing agent 2 | - | 2 | - | - | - | - | - | - |
| Peptizing agent 3 | - | - | 4 | - | - | - | - | - |
| Final stage | | | | | | | | |
| Antioxidant | 1.5 | 1.5 | 1.5 | - | 1.5 | 1.5 | 1.5 | 1.5 |
| Stearic acid | 2 | 2 | 2 | - | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |
| Evaluation | | | | | | | | |
| Index of processability | 5 | 4 | 5 | 3 | 2 | 4 | 3 | 4 |
| Index of fuel efficiency | 136 | 129 | 124 | 100 | 101 | 102 | 101 | 101 |
| Index of abrasion resistance | 107 | 106 | 103 | 100 | 100 | 101 | 101 | 101 |

Table 9

| | Examples | | | Examples | | | | |
|---|---|---|---|---|---|---|---|---|
| | 46 | 47 | 48 | 42 | 43 | 44 | 45 | 46 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |
| Silica 1 | 50 | 50 | 50 | 50 | 50 | 50 | 50 | 50 |
| Silica 2 | - | - | - | - | - | - | - | - |
| Silane coupling agent 3 | - | - | - | - | - | - | - | - |
| Silane coupling agent 4 | 2.5 | 2.5 | 2.5 | 2.5 | 2.5 | - | - | - |
| Silane coupling agent 5 | - | - | - | - | - | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| An tioxidan t | | | | 1.5 | - | - | - | - |
| Stearic acid | | | | 2 | - | - | - | - |
| Zinc oxide | 2.5 | 2.5 | 2.5 | 2.5 | 2.5 | 2.5 | 2.5 | 2.5 |
| Peptizing agent 1 | - | - | - | - | - | 2 | - | - |
| Peptizing agent 2 | - | - | - | - | - | - | 2 | - |
| Peptizing agent 3 | - | - | - | - | - | - | - | 4 |
| Y-kneading | | | | | | | | |
| Silica 1 | 30 | 30 | 30 | 30 | 30 | 30 | 30 | 30 |
| Silica 2 | - | - | - | - | - | - | - | - |
| Silane coupling agent 3 | - | - | - | - | - | - | - | - |
| Silane coupling agent 4 | 1.5 | 1.5 | 1.5 | 1.5 | 1.5 | 4 | 4 | 4 |
| Silane coupling agent 5 | - | - | - | - | - | - | - | - |
| Peptizing agent 1 | 2 | - | - | - | - | - | - | - |
| Peptizing agent 2 | - | 2 | - | - | - | - | - | - |
| Peptizing agent 3 | - | - | 4 | - | - | - | - | - |
| Final stage | | | | | | | | |
| An tioxidan t | 1.5 | 1.5 | 1.5 | - | 1.5 | 1.5 | 1.5 | 1.5 |
| Stearic acid | 2 | 2 | 2 | - | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |

(continued)

| | | | | | | | | |
|---|---|---|---|---|---|---|---|---|
| Evaluation | | | | | | | | |
| Index of processability | 4 | 3 | 4 | 3 | 2 | 4 | 3 | 4 |
| Index of fuel efficiency | 133 | 126 | 121 | 100 | 101 | 102 | 101 | 102 |
| Index of abrasion resistance | 105 | 103 | 101 | 100 | 100 | 101 | 100 | 101 |

Table 10

| | Examples | | | Com. Ex. | | | |
|---|---|---|---|---|---|---|---|
| | 49 | 50 | 51 | 47 | 48 | 49 | 50 |
| Compounding components | | | | | | | |
| 1st stage | | | | | | | |
| X-kneading | | | | | | | |
| NR | 25 | 25 | 25 | 25 | 25 | 25 | 25 |
| SBR1 | - | - | - | - | - | - | - |
| SBR2 | 45 | 45 | 45 | 45 | 45 | 45 | 45 |
| BR1 | 30 | 30 | 30 | 30 | 30 | 30 | 30 |
| BR2 | - | - | - | - | - | - | - |
| BR3 | - | - | - | - | - | - | - |
| Silica 1 | - | - | - | - | - | - | - |
| Silica 2 | 50 | 50 | 50 | 50 | 50 | 50 | 50 |
| Silane coupling agent 3 | 2.5 | 2.5 | 2.5 | 2.5 | | - | - |
| Silane coupling agent 4 | - | - | - | - | - | - | - |
| Silane coupling agent 5 | - | - | - | - | - | - | - |
| Carbon black | 15 | 15 | 15 | 15 | 15 | 15 | 15 |
| Oil | 25 | 25 | 25 | 25 | 25 | 25 | 25 |
| Wax | 1 | 1 | 1 | 1 | 1 | 1 | 1 |
| Antioxidant | - | - | - | 1.5 | - | - | - |
| Stearic acid | - | - | - | 2 | - | - | - |
| Zinc oxide | 2.5 | 2.5 | 2.5 | 2.5 | 2.5 | 2.5 | 2.5 |
| Peptizing agent 1 | - | - | - | - | 2 | - | - |
| Peptizing agent 2 | - | - | - | - | - | 2 | - |
| Peptizing agent 3 | - | - | - | - | - | - | 4 |
| Y-kneading | | | | | | | |
| Silica 1 | - | - | - | - | - | - | - |
| Silica 2 | 30 | 30 | 30 | 30 | 30 | 30 | 30 |
| Silane coupling agent 3 | 1.5 | 1.5 | 1.5 | 1.5 | 4 | 4 | 4 |
| Silane coupling agent 4 | - | - | - | - | - | - | - |
| Silane coupling agent 5 | - | - | - | - | - | - | - |
| Peptizing agent 1 | 2 | - | - | - | - | - | - |
| Peptizing agent 2 | - | 2 | - | - | - | - | - |
| Peptizing agent 3 | - | - | 4 | - | - | - | - |
| Final stage | | | | | | | |
| An tioxidan t | 1.5 | 1.5 | 1.5 | - | 1.5 | 1.5 | 1.5 |
| Stearic acid | 2 | 2 | 2 | - | 2 | 2 | 2 |
| Sulfur | 1.5 | 1.5 | 1.5 | 1.5 | 1.5 | 1.5 | 1.5 |

(continued)

| | | | | | | | |
|---|---|---|---|---|---|---|---|
| Final stage | | | | | | | |
| Vulcanization accelerator 1 | 2 | 2 | 2 | 2 | 2 | 2 | 2 |
| Vulcanization accelerator 2 | 1 | 1 | 1 | 1 | 1 | 1 | 1 |
| Period of time until addition of a peptizing agent is initiated after addition of a silane coupling agent (s) | 90 | 90 | 90 | - | - | - | - |
| Temperature of a rubber composition when a peptizing agent is added (°C) | 130 | 130 | 130 | - | - | - | - |
| Evaluation | | | | | | | |
| Index of processability | 4 | 4 | 4 | 3 | 2 | 2 | 3 |
| Index of fuel efficiency | 140 | 135 | 127 | 100 | 100 | 101 | 101 |
| Index of abrasion resistance | 110 | 108 | 106 | 100 | 100 | 101 | 101 |

Table 11

| | Examples | | | Comparative Examples | | | |
|---|---|---|---|---|---|---|---|
| | 52 | 53 | 54 | 51 | 52 | 53 | | 55 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |
| Silica 1 | 50 | 50 | 50 | 50 | 50 | 50 | 50 | 50 |
| Silica 2 | - | - | - | - | - | - | - | - |
| Silane coupling agent 3 | - | - | - | - | - | - | - | - |
| Silane coupling agent 4 | - | - | - | - | - | - | - | - |
| Silane coupling agent 5 | 4 | 4 | 4 | 4 | 4 | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| Anti-oxidant | - | - | - | 1.5 | - | - | - | - |
| Stearic acid | - | - | - | 2 | - | - | - | - |
| Zinc oxide | 2.5 | 2.5 | 2.5 | 2.5 | 2.5 | 2.5 | 2.5 | 2.5 |
| Peptizing agent 1 | - | - | - | - | - | 2 | - | - |
| Peptizing agent 2 | - | - | - | - | - | - | 2 | - |
| Peptizing agent 3 | - | - | - | - | - | - | - | 4 |
| Y-kneading | | | | | | | | |
| Silica 1 | 30 | 30 | 30 | 30 | 30 | 30 | 30 | 30 |
| Silica 2 | - | - | - | - | - | - | - | - |
| Silane coupling agent 3 | - | - | - | - | - | - | - | - |
| Silane coupling agent 4 | - | - | - | - | - | - | - | - |
| Silane coupling agent 5 | 2.4 | 2.4 | 2.4 | 2.4 | 2.4 | 6.4 | 6.4 | 6.4 |

(continued)

| | | | | | | | | |
|---|---|---|---|---|---|---|---|---|
| Y-kneading | | | | | | | | |
| Peptizing agent 1 | 2 | - | - | - | - | - | - | - |
| Peptizing agent 2 | - | 2 | - | - | - | - | - | - |
| Peptizing agent 3 | - | - | 4 | - | - | - | - | - |
| Final stage | | | | | | | | |
| Antioxidant | 1.5 | 1.5 | 1.5 | - | 1.5 | 1.5 | 1.5 | 1.5 |
| Stearic acid | 2 | 2 | 2 | - | 2 | 2 | 2 | 2 |
| Sulfur | 1.5 | 1.5 | 1.5 | 1.5 | 1.5 | 1.5 | 1.5 | 1.5 |
| Vulcanization accelerator 1 | 2 | 2 | 2 | 2 | 2 | 2 | 2 | 2 |
| Vulcanization accelerator 2 | 1 | 1 | 1 | 1 | 1 | 1 | 1 | 1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |
| Evaluation | | | | | | | | |
| Index of processability | 5 | 4 | 5 | 3 | 2 | 4 | 3 | 4 |
| Index of fuel efficiency | 112 | 110 | 108 | 100 | 101 | 102 | 101 | 102 |
| Index of abrasion resistance | 102 | 102 | 101 | 100 | 101 | 101 | 100 | 101 |

Table 12

| | Examples | | | Comarative Examples | | | | |
|---|---|---|---|---|---|---|---|---|
| | 55 | 56 | 57 | 56 | 57 | 58 | 59 | 60 |
| Compounding components | | | | | | | | |
| 1st stage | | | | | | | | |
| X-kneading | | | | | | | | |
| NR | 25 | 25 | 25 | 25 | 25 | 25 | 25 | 25 |
| SBR1 | - | - | - | - | - | - | - | - |
| SBR2 | 45 | 45 | 45 | 45 | 45 | 45 | 45 | 45 |
| BR1 | 30 | 30 | 30 | 30 | 30 | 30 | 30 | 30 |
| BR2 | - | - | - | - | - | - | - | - |
| BR3 | - | - | - | - | - | - | - | - |
| Silica 1 | 50 | 50 | 50 | 50 | 50 | 50 | 50 | 50 |
| Silica 2 | - | - | - | - | - | - | - | - |
| Silane coupling agent 1 | 2.5 | 2.5 | 2.5 | 2.5 | 2.5 | - | - | - |
| Silane coupling agent 2 | - | - | - | - | - | - | - | - |
| Silane coupling agent 3 | - | - | - | - | - | - | - | - |
| Carbon black | 15 | 15 | 15 | 15 | 15 | 15 | 15 | 15 |
| Oil | 25 | 25 | 25 | 25 | 25 | 25 | 25 | 25 |
| Wax | 1 | 1 | 1 | 1 | 1 | 1 | 1 | 1 |
| Antioxidant | - | - | - | 1.5 | - | - | - | - |
| Stearic acid | - | - | - | 2 | - | - | - | - |
| Zinc oxide | 2.5 | 2.5 | 2.5 | 2.5 | 2.5 | 2.5 | 2.5 | 2.5 |
| Peptizing agent 4 | - | - | - | - | - | 2 | - | - |
| Peptizing agent 5 | - | - | - | - | - | - | 2 | - |
| Peptizing agent 6 | - | - | - | - | - | - | - | 0.2 |

(continued)

| | | | | | | | | |
|---|---|---|---|---|---|---|---|---|
| Y-kneading | | | | | | | | |
| Silica 1<br>Silica 2 | 30<br>- | 30<br>- | 30<br>- | 30<br>- | 30<br>- | 30<br>- | 30<br>- | 30<br>- |
| Silane coupling agent 1<br>Silane coupling agent 2<br>Silane coupling agent 3 | 1.5<br>-<br>- | 1.5<br>-<br>- | 1.5<br>-<br>- | 1.5<br>-<br>- | 1.5<br>-<br>- | 4<br>-<br>- | 4<br>-<br>- | 4<br>-<br>- |
| Peptizing agent 4<br>Peptizing agent 5<br>Peptizing agent 6 | 2<br>-<br>- | -<br>2<br>- | -<br>-<br>0.2 | -<br>-<br>- | -<br>-<br>- | -<br>-<br>- | -<br>-<br>- | -<br>-<br>- |
| Final stage | | | | | | | | |
| Antioxidant<br>Stearic acid<br>Sulfur<br>Vulcanization accelerator 1<br>Vulcanization accelerator 2 | 1.5<br>2<br>1.5<br>2<br>1 | 1.5<br>2<br>1.5<br>2<br>1 | 1.5<br>2<br>1.5<br>2<br>1 | -<br>-<br>1.5<br>2<br>1 | 1.5<br>2<br>1.5<br>2<br>1 | 1.5<br>2<br>1.5<br>2<br>1 | 1.5<br>2<br>1.5<br>2<br>1 | 1.5<br>2<br>1.5<br>2<br>1 |
| Period of time until addition of a peptizing agent is initiated after addition of a silane coupling agent (s) | 90 | 90 | 90 | - | - | - | - | - |
| Temperature of a rubber composition when a peptizing agent is added (°C) | 130 | 130 | 130 | - | - | - | - | - |
| Evaluation | | | | | | | | |
| Index of processability<br>Index of fuel efficiency<br>Index of abrasion resistance | 4<br>110<br>102 | 3<br>108<br>102 | 3<br>106<br>101 | 3<br>100<br>100 | 2<br>101<br>101 | 3<br>102<br>101 | 3<br>101<br>100 | 3<br>101<br>101 |

INDUSTRIAL APPLICABILITY

The present invention can provide a process for preparing a rubber composition for a tire having improved processability, abrasion resistance and fuel efficiency in a good balance and a pneumatic tire produced using the rubber composition for a tire prepared by the preparation process.

## Claims

1. A process for preparing a rubber composition for a tire comprising a rubber component (A) comprising a natural rubber and/or a synthetic diene rubber, a filler comprising an inorganic filler (B) at least comprising silica, a silane coupling agent (C) and a peptizing agent (D),
wherein a kneading step comprises at least two kneading stages including a first kneading stage using no vulcanization chemical and a final kneading stage using vulcanization chemicals,
the first kneading stage comprises adding and kneading of the whole or a part of the silane coupling agent (C) at the same time as or after kneading of the rubber component (A) and the whole or a part of the inorganic filler (B), and further adding and kneading of the peptizing agent (D) at the same time as or after the addition of the whole or a part of the silane coupling agent (C), and
in the first kneading stage, the peptizing agent (D) is added to the rubber composition when a temperature of the rubber composition reached 75°C to 180°C, and a period of time after completion of the addition of the silane coupling agent (C) to the rubber component (A) until addition of the peptizing agent (D) is 10 to 180 seconds.

2. The process for preparing a rubber composition for a tire of claim 1, wherein the peptizing agent (D) is at least one selected from the group consisting of compounds represented by the following general formulas (IX) and (X):

X-Ph-S-S-Ph-X (IX)

X-Ph-S-Zn-S-Ph-X (X)

wherein Ph is a phenyl group or its derivative, and X represents a functional group comprising carbon and hydrogen or comprising carbon, hydrogen and nitrogen.

3. The process for preparing a rubber composition for a tire of claim 1 or 2, wherein the silane coupling agent (C) is at least one selected from the group consisting of compounds represented by the following general formulas (I) to (IV):

$$(R^1O)_{3-p}(R^2)_pSi\text{-}R^3\text{-}S_a\text{-}R^3\text{-}Si(OR^1)_{3-r}(R^2)_r \cdots \quad (I)$$

wherein in the case of plural $R^1$s, the $R^1$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^2$s, the $R^2$s may be the same or different and each is a linear, cyclic or branched alkyl group having 1 to 8 carbon atoms; in the case of plural $R^3$s, the $R^3$s may be the same or different and each is a linear or branched alkylene group having 1 to 8 carbon atoms; a is 2 to 6 as an average value; p and r may be the same or different and each is 0 to 3 as an average value, however, there is no case where the both of p and r are 3,

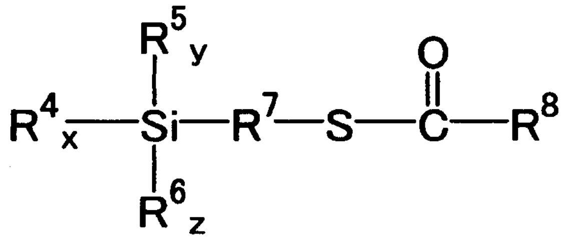

··· (II)

wherein $R^4$ is a monovalent group selected from -Cl, -Br, $R^9O$-, $R^9C(=O)O$-, $R^9R^{10}C=NO$-, $R^9R^{10}CNO$-, $R^9R^{10}N$- and $-(OSiR^9R^{10})_h(OSiR^9R^{10}R^{11})$ (each of $R^9$, $R^{10}$ and $R^{11}$ is hydrogen atom or a monovalent hydrocarbon group having 1 to 18 carbon atoms, and h is 1 to 4 as an average value); $R^5$ is $R^4$, hydrogen atom or a monovalent hydrocarbon group having 1 to 18 carbon atoms; $R^6$ is $R^4$, $R^5$, hydrogen atom or a monovalent group represented by $-[O(R^{12}O)_j]_{0.5}$ ($R^{12}$ is an alkylene group having 1 to 18 carbon atoms, j is an integer of 1 to 4); $R^7$ is a divalent hydrocarbon group having 1 to 18 carbon atoms; $R^8$ is a monovalent hydrocarbon group having 1 to 18 carbon atoms; and x, y and z are numerals satisfying relations of $x+y+2z=3$, $0 \leq x \leq 3$, $0 \leq y \leq 2$ and $0 \leq z \leq 1$,

$$(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \cdots \quad (III)$$

wherein in the case of plural $R^{13}$s, the $R^{13}$s may be the same or different and each is a linear, cyclic or branched alkyl group having 1 to 8 carbon atoms, a linear or branched alkoxyalkyl group having 2 to 8 carbon atoms or hydrogen atom; in the case of plural $R^{14}$s, the $R^{14}$s may be the same or different and each is a linear, cyclic or branched alkyl group having 1 to 8 carbon atoms; in the case of plural $R^{15}$s, the $R^{15}$s may be the same or different and each is a linear or branched alkylene group having 1 to 8 carbon atoms; $R^{16}$ is any one of divalent groups represented by $(\text{-}S\text{-}R^{17}\text{-}S\text{-})$, $(\text{-}R^{18}\text{-}S_{m1}\text{-}R^{19}\text{-})$ and $(\text{-}R^{20}\text{-}S_{m2}\text{-}R^{21}\text{-}S_{m3}\text{-}R^{22}\text{-})$ (each of $R^{17}$ to $R^{22}$ is a divalent hydrocarbon group having 1 to 20 carbon atoms, a divalent aromatic group or a divalent organic group having a hetero element except sulfur and oxygen, each of m1, m2 and m3 is 1 or more and less than 4 as an average value); in the case of plural k's, the k's may be the same or different and each is 1 to 6 as an average value; each of s and t is 0 to 3 as an average value, however, there is no case where the both of s and t are 3,

$$\underbrace{[R^{23}\text{-}C(=O)\text{-}S\text{-}G\text{-}SiZ^a{}_uZ^b{}_vZ^c{}_w]_m}_{A}\underbrace{[HS\text{-}G\text{-}SiZ^a{}_uZ^b{}_vZ^c{}_w]_n}_{B} \cdots \quad (IV)$$

wherein $R^{23}$ is a linear, branched or cyclic alkyl group having 1 to 20 carbon atoms; in the case of plural Gs, the Gs may be the same or different and each is an alkanediyl group or alkenediyl group having 1 to 9 carbon atoms; in the case of plural $Z^a$s, the $Z^a$s may be the same or different and each is a functional group being capable of bonding to two silicon atoms and selected from $[\text{-}O\text{-}]_{0.5}$, $[\text{-}O\text{-}G\text{-}]_{0.5}$ and $[\text{-}O\text{-}G\text{-}O\text{-}]_{0.5}$; in the case of plural $Z^b$s, the $Z^b$s may be the same or different and each is a functional group being capable of bonding to two silicon atoms and represented by $[\text{-}O\text{-}G\text{-}O\text{-}]_{0.5}$; in the case of plural $Z^c$s, the $Z^c$s may be the same or different and each is a functional group selected from -Cl, -Br, $\text{-}OR^a$, $R^aC(=O)O$-, $R^aR^bC=NO$-, $R^aR^bN$-, $R^a$- and HO-G-O- (G is the same as the above definition),

and each of $R^a$ and $R^b$ is a linear, cyclic or branched alkyl group having 1 to 20 carbon atoms; m, n, u, v and w are $1 \le m \le 20$, $0 \le n \le 20$, $0 \le u \le 3$, $0 \le v \le 2$ and $0 \le w \le 1$, respectively and $(u/2)+v+2w=2$ or 3; in the case of moiety A being plural, $Z^a_u$, $Z^b_v$ and $Z^c_w$ in the plural moiety A may be the same or different and in the case of moiety B being plural, $Z^a_u$, $Z^b_v$ and $Z^c_w$ in the plural moiety B may be the same or different.

**4.** The process for preparing a rubber composition for a tire of claim 3, wherein the silane coupling agent (C) is the compound represented by the general formula (I).

**5.** The process for preparing a rubber composition for a tire of any one of claims 1 to 4, wherein a content of the inorganic filler (B) in the filler is not less than 30% by mass.

**6.** The process for preparing a rubber composition for a tire of any one of claims 1 to 5, wherein in the rubber composition at the first kneading stage, the number of molecules of the peptizing agent (D) is 0.1 to 1.0 time the number of molecules of the silane coupling agent (C).

**7.** The process for preparing a rubber composition for a tire of any one of claims 1 to 6, wherein the rubber composition at the first kneading stage is one comprising an organic acid compound and 50 mol % or more in the organic acid compound is a stearic acid.

**8.** A pneumatic tire produced using the rubber composition for a tire prepared by the process of any one of claims 1 to 7.

**Patentansprüche**

**1.** Verfahren zur Herstellung einer Kautschukzusammensetzung für einen Reifen, umfassend eine Kautschukkomponente (A), die einen Naturkautschuk und/oder einen synthetischen Dien-Kautschuk umfasst, einen Füllstoff, der einen anorganischen Füllstoff (B) umfasst, welcher zumindest Siliciumdioxid umfasst, ein Silankopplungsmittel (C) und ein Peptisiermittel (D),
wobei ein Knetschritt mindestens zwei Knetstufen umfasst, die eine erste Knetstufe ohne Verwendung von Vulkanisationschemikalien und eine abschließende Knetstufe unter Verwendung von Vulkanisationschemikalien enthalten,
die erste Knetstufe das Hinzufügen und Kneten des gesamten oder eines Teils des Silankopplungsmittels (C) gleichzeitig mit oder nach dem Kneten der Kautschukkomponente (A) und des ganzen oder eines Teils des anorganischen Füllstoffs (B) und zudem das Hinzufügen und Kneten des Peptisiermittels (D) gleichzeitig mit oder nach der Zugabe des ganzen oder eines Teils des Silankopplungsmittels (C) umfasst, und
in der ersten Knetstufe das Peptisiermittel (D) zu der Kautschukzusammensetzung zugegeben wird, wenn eine Temperatur der Kautschukzusammensetzung 75°C bis 180°C erreicht hat, und ein Zeitraum nach dem Abschluss der Zugabe des Silankopplungsmittels (C) zu der Kautschukkomponente (A) bis zur Zugabe des Peptisiermittels (D) 10 bis 180 Sekunden beträgt.

**2.** Verfahren zur Herstellung einer Kautschukzusammensetzung für einen Reifen nach Anspruch 1, wobei das Peptisiermittel (D) mindestens eines ist, welches ausgewählt ist aus der Gruppe bestehend aus den durch die folgenden allgemeinen Formeln (IX) und (X) dargestellten Verbindungen:

X-Ph-S-S-Ph-X (IX)

X-Ph-S-Zn-S-Ph-X (X)

wobei Ph eine Phenylgruppe oder deren Derivat ist, und X eine funktionelle Gruppe darstellt, die Kohlenstoff und Wasserstoff umfasst oder Kohlenstoff, Wasserstoff und Stickstoff umfasst.

**3.** Verfahren zur Herstellung einer Kautschukzusammensetzung für einen Reifen nach Anspruch 1 oder 2, wobei das Silankopplungsmittel (C) mindestens eins ist, welches ausgewählt ist aus der Gruppe bestehend aus durch die folgenden allgemeinen Formeln (I) bis (IV) dargestellten Verbindungen:

$$(R^1O)_{3-p}(R^2)_pSi\text{-}R^3\text{-}S_a\text{-}R^3\text{-}Si(OR^1)_{3-r}(R^2)_r \cdots \qquad (I)$$

wobei in dem Fall mehrerer $R^1$ die $R^1$ gleich oder verschieden sein können und jedes eine lineare, zyklische oder

verzweigte Alkylgruppe mit 1 bis 8 Kohlenstoffatomen, eine lineare oder verzweigte Alkoxyalkylgruppe mit zwei bis 8 Kohlenstoffatomen oder ein Wasserstoffatom ist; in dem Fall mehrerer $R^2$ die $R^2$ gleich oder verschieden sein können und jedes eine lineare, zyklische oder verzweigte Alkylgruppe mit 1 bis 8 Kohlenstoffatomen ist; in dem Fall mehrerer $R^3$ die $R^3$ gleich oder verschieden sein können und jedes eine lineare oder verzweigte Alkylengruppe mit 1 bis 8 Kohlenstoffatomen ist; a als Mittelwert 2 bis 6 ist; p und r gleich oder verschieden sein können und jedes als Mittelwert 0 bis 3 ist, wobei es jedoch keinen Fall gibt, bei dem p und r beide 3 sind,

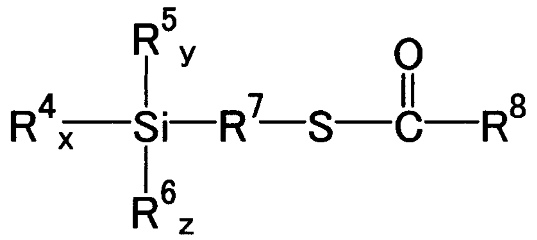

· · · (II)

wobei $R^4$ eine einwertige Gruppe ist, welche ausgewählt ist aus -Cl, -Br, $R^9O$-, $R^9C(=O)O$-, $R^9R^{10}C=NO$-, $R^9R^{10}CNO$-, $R^9R^{10}N$-, und $-(OSiR^9R^{10})_h(OSiR^9R^{10}R^{11})$ (jedes von $R^9$, $R^{10}$ und $R^{11}$ ein Wasserstoffatom oder eine einwertige Kohlenwasserstoffgruppe mit 1 bis 18 Kohlenstoffatomen ist, und h als Mittelwert 1 bis 4 ist); $R^5R^4$, ein Wasserstoffatom oder eine einwertige Kohlenwasserstoffgruppe mit 1 bis 18 Kohlenstoffatomen ist; $R^6R^4$,$R^5$, ein Wasserstoffatom oder eine einwertige, durch $-[O(R^{12}O)_j]_{0,5}$ dargestellte Gruppe ist ($R^{12}$ eine Alkylengruppe mit 1 bis 18 Kohlenstoffatomen ist, j eine ganze Zahl von 1 bis 4 ist); $R^7$ eine zweiwertige Kohlenwasserstoffgruppe mit 1 bis 18 Kohlenstoffatomen ist; $R^8$ eine einwertige Kohlenwasserstoffgruppe mit 1 bis 18 Kohlenstoffatomen ist; und x, y und z Zahlen sind, welche die Relationen x+y+2z=3, 0≤x≤3, 0≤y≤2 und 0≤z≤1 erfüllen,

$$(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \cdots \qquad (III)$$

wobei in dem Fall mehrerer $R^{13}$ die $R^{13}$ gleich oder verschieden sein können und jedes eine lineare, zyklische oder verzweigte Alkylgruppe mit 1 bis 8 Kohlenstoffatomen, eine lineare oder verzweigte Alkoxyalkylgruppe mit 2 bis 8 Kohlenstoffatomen oder ein Wasserstoffatom ist; in dem Fall mehrerer $R^{14}$ die $R^{14}$ gleich oder verschieden sein können und jedes eine lineare, zyklische oder verzweigte Alkylgruppe mit 1 bis 8 Kohlenstoffatomen ist; in dem Fall mehrerer $R^{15}$ die $R^{15}$ gleich oder verschieden sein können und jedes eine lineare oder verzweigte Alkylengruppe mit 1 bis 8 Kohlenstoffatomen ist; $R^{16}$ eine der durch ($-S-R^{17}-S-$), ($-R^{18}-S_{m1}-R^{19}-$) und ($-R^{20}-S_{m2}-R^{21}-S_{m3}-R^{22}-$) dargestellten zweiwertigen Gruppen ist (jedes von $R^{17}$ bis $R^{22}$ eine zweiwertige Kohlenwasserstoffgruppe mit 1 bis 20 Kohlenstoffatomen, eine zweiwertige aromatische Gruppe oder eine zweiwertige organische Gruppe mit einem Heteroelement außer Schwefel und Sauerstoff ist, jedes von m1, m2 und m3 als Mittelwert 1 oder mehr und weniger als 4 ist; in dem Fall mehrerer k's die k's gleich oder verschieden sein können und jedes als Mittelwert 1 bis 6 ist; jedes von s und t als Mittelwert 0 bis 3 ist, wobei es jedoch keinen Fall gibt, bei dem s und t beide 3 sind,

$$\underbrace{[R^{23}-C(=O)-S-G-SiZ^a{}_uZ^b{}_vZ^c{}_w]_m}_{A}\underbrace{[HS-G-SiZ^a{}_uZ^b{}_vZ^c{}_w]_n}_{B} \quad \cdots \quad (IV)$$

wobei $R^{23}$ eine lineare, verzweigte oder zyklische Alkylgruppe mit 1 bis 20 Kohlenstoffatomen ist; in dem Fall mehrerer G's die G's gleich oder verschieden sein können und jedes eine Alkandiylgruppe oder Alkendiylgruppe mit 1 bis 9 Kohlenstoffatomen ist; in dem Fall mehrerer $Z^a$'s die $Z^a$'s gleich oder verschieden sein können und jedes eine funktionelle Gruppe ist, die zur Bindung an zwei Siliciumatome fähig und aus $[-O-]_{0.5}$, $[-O-G-]_{0.5}$ und $[-O-G-O-]_{0.5}$ ausgewählt ist; in dem Fall mehrerer $Z^b$'S die $Z^b$'S gleich oder verschieden sein können und jedes eine funktionelle Gruppe ist, die zur Bindung an zwei Siliciumatome fähig und durch $[-O-G-O-]_{0.5}$ dargestellt ist; in dem Fall mehrerer $Z^c$'s die $Z^c$'s gleich oder verschieden sein können und jedes eine aus -Cl, -Br, $-OR^a$, $R^aC(=O)O$-, $R^aR^bC=NO$-, $R^aR^bN$-, $R^a$- und HO-G-O- ausgewählte funktionelle Gruppe ist (G gleich ist wie oben definiert), und jedes von $R^a$ und $R^b$ eine lineare, zyklische oder verzweigte Alkylgruppe mit 1 bis 20 Kohlenstoffatomen ist; m, n, u, v und w jeweils 1≤m≤20, 0≤n≤20, 0≤u≤3, 0≤v≤2 und 0≤w≤1 sind und (u/2)+v+2w=2 oder 3; in dem Fall, dass die Einheit A mehrfach vorliegt, $z^a{}_u$, $Z^b{}_v$ und $Z^c{}_w$ in der mehrfachen Einheit A gleich oder verschieden sein können und dem Fall, dass die Einheit B mehrfach vorliegt, $z^a{}_u$, $Z^b{}_v$ und $Z^c{}_w$ in der mehrfachen Einheit B gleich oder verschieden sein können.

**4.** Verfahren zur Herstellung einer Kautschukzusammensetzung für einen Reifen nach Anspruch 3, wobei das Silankopplungsmittel (C) die durch die allgemeine Formel (I) dargestellte Verbindung ist.

5. Verfahren zur Herstellung einer Kautschukzusammensetzung für einen Reifen nach einem der Ansprüche 1 bis 4, wobei ein Gehalt des anorganischen Füllstoffs (B) in dem Füllstoff nicht weniger als 30 Massenprozent beträgt.

6. Verfahren zur Herstellung einer Kautschukzusammensetzung für einen Reifen nach einem der Ansprüche 1 bis 5, wobei in der Kautschukzusammensetzung bei der ersten Knetstufe die Anzahl an Molekülen des Peptisiermittels (D) das 0,1-bis 1,0 - fache der Anzahl an Molekülen des Silankopplungsmittels (C) beträgt.

7. Verfahren zur Herstellung einer Kautschukzusammensetzung für einen Reifen nach einem der Ansprüche 1 bis 6, wobei die Kautschukzusammensetzung bei der ersten Knetstufe eine organische Säureverbindung umfasst und in der organischen Säureverbindung 50 Molprozent oder mehr eine Stearinsäure ist.

8. Luftreifen, erzeugt unter Verwendung der durch das Verfahren nach einem der Ansprüche 1 bis 7 hergestellten Kautschukzusammensetzung für einen Reifen.

## Revendications

1. Procédé de préparation d'une composition de caoutchouc pour pneumatique comprenant un composant de caoutchouc (A) comprenant un caoutchouc naturel et/ou un caoutchouc de diène synthétique, une charge comprenant une charge inorganique (B) comprenant au moins de la silice, un agent de couplage de silane (C) et un agent peptidisant (D),
une étape de pétrissage comprenant au moins deux stades de pétrissage comprenant un premier stade de pétrissage n'utilisant pas de produit chimique de vulcanisation et un stade de pétrissage final utilisant des produits chimiques de vulcanisation,
le premier stade de pétrissage comprend l'addition et le pétrissage de l'ensemble ou d'une partie de l'agent de couplage de silane (C) en même temps ou après le pétrissage du composant de caoutchouc (A) et l'ensemble ou une partie de la charge inorganique (B) et en outre l'addition et le pétrissage de l'agent peptidisant (D) en même temps ou après l'addition de l'ensemble ou d'une partie de l'agent de couplage de silane (C), et
dans la premier stade de pétrissage, l'agent peptidisant (D) est ajouté à la composition de caoutchouc quand une température de la composition de caoutchouc a atteint 75 °C à 180 °C, et une période de temps après la fin de l'addition de l'agent de couplage de silane (C) au composant de caoutchouc (A) jusqu'à l'addition de l'agent peptidisant (D) est de 10 à 180 secondes.

2. Procédé de préparation d'une composition de caoutchouc pour pneumatique selon la revendication 1, dans lequel l'agent peptidisant (D) est au moins un choisi dans le groupe constitué par les composés représentés par les formules générales suivantes (IX) et (X)

X-Ph-S-S-Ph-X (IX)

X-Ph-S-Zn-S-Ph-X (X)

dans lesquelles Ph est un groupe phényle ou son dérivé, et X représente un groupe fonctionnel comprenant du carbone et de l'hydrogène ou comprenant du carbone, de l'hydrogène et de l'azote.

3. Procédé de préparation d'une composition de caoutchouc pour pneumatique selon la revendication 1 ou 2, dans lequel le composé de couplage de silane (C) est au moins un choisi dans le groupe constitué par les composés représentés par les formules générales suivantes (I) à (IV) :

$$(R^1O)_{3-p}(R^2)_pSi\text{-}R^3\text{-}S_a\text{-}R^3\text{-}Si(OR^1)_{3-r}(R^2)_r \cdots \quad (I)$$

dans laquelle dans le cas des $R^1$ pluriels, les $R^1$ peuvent être identiques ou différents et chacun est un groupe alkyle linéaire, cyclique ou ramifié ayant 1 à 8 atomes de carbone, un groupe alcoxyalkyle linéaire ou ramifié ayant 2 à 8 atomes de carbone ou un atome d'hydrogène ; dans le cas des $R^2$ pluriels, les $R^2$ peuvent être identiques ou différents et chacun est un groupe alkyle linéaire, cyclique ou ramifié ayant 1 à 8 atomes de carbone, ; dans le cas des $R^3$ pluriels, les $R^3$ peuvent être identiques ou différents et chacun est un groupe alkylène linéaire ou ramifié ayant 1 à 8 atomes de carbone ; a vaut 2 à 6 comme valeur moyenne ; p et r peuvent être identiques ou différents

et chacun vaut 0 à 3 comme valeur moyenne, cependant, il n'y a pas de cas où les deux p et r valent 3,

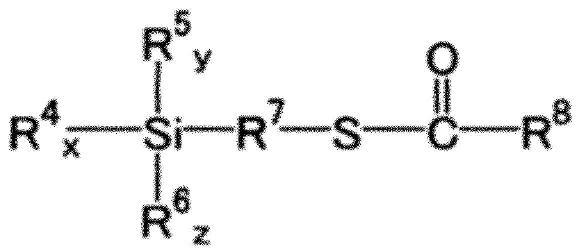

· · · (II)

dans laquelle $R^4$ est un groupe monovalent choisi parmi -Cl, -Br, $R^9O$-, $R^9C(=O)O$-, $R^9R^{10}C=NO$-, $R^9R^{10}CNO$-, $R^9R^{10}N$- et $-(OSiR^9R^{10})_h(OSiR^9R^{10}R^{11})$ (chacun de $R^9$, $R^{10}$ et $R^{11}$ est un atome d'hydrogène ou un groupe hydrocarbure monovalent ayant 1 à 18 atomes de carbone et h vaut 1 à 4 comme valeur moyenne) ; $R^5$ est $R^4$, un atome d'hydrogène ou un groupe hydrocarbure monovalent ayant 1 à 18 atomes de carbone ; $R^6$ est $R^4$, $R^5$, un atome d'hydrogène ou un groupe monovalent représenté par $-[O(R^{12}O)_j]_{0,5}$ ($R^{12}$ est un groupe alkylène ayant 1 à 18 atomes de carbone, j est un nombre entier de 1 à 4) ; $R^7$ est un groupe hydrocarbure divalent ayant 1 à 18 atomes de carbone ; $R^8$ est un groupe hydrocarbure monovalent ayant 1 à 18 atomes de carbone ; et x,y et z sont des nombres satisfaisant les relations de $x + y + 2z = 3$, $0 \leq x \leq 3$, $0 \leq y \leq 2$ et $0 \leq z \leq 1$,

$$(R^{13}O)_{3-s}(R^{14})_sSi\text{-}R^{15}\text{-}S_k\text{-}R^{16}\text{-}S_k\text{-}R^{15}\text{-}Si(OR^{13})_{3-t}(R^{14})_t \cdots \qquad (III)$$

dans laquelle dans le cas des $R^{13}$ pluriels, les $R^{13}$ peuvent être identiques ou différents et chacun est un groupe alkyle linéaire, cyclique ou ramifié ayant 1 à 8 atomes de carbone, un groupe alcoxyalkyle linéaire ou ramifié ayant 2 à 8 atomes de carbone ou un atome d'hydrogène ; dans le cas des $R^{14}$ pluriels, les $R^{14}$ peuvent être identiques ou différents et chacun est un groupe alkyle linéaire, cyclique ou ramifié ayant 1 à 8 atomes de carbone ; dans le cas des $R^{15}$ pluriels, les $R^{15}$ peuvent être identiques ou différents et chacun est un groupe alkylène linéaire ou ramifié ayant 1 à 8 atomes de carbone ; $R^{16}$ est l'un quelconque un de groupes divalents représentés par $(-S-R^{17}-S)$, $(-R^{18}-S_{m1}-R^{19}-)$ et $(-R^{20}-S_{m2}-R^{21}-S_{m3}-R^{22}-)$ (chacun de $R^{17}$ à $R^{22}$ est un groupe hydrocarbure divalent ayant 1 à 20 atomes de carbone, un groupe aromatique divalent ou un groupe organique divalent ayant un élément hétéro à l'exception du soufre et de l'oxygène, chacun de m1, m2 et m3 vaut 1 ou plus et moins de 4 comme valeur moyenne) ; dans le cas des k pluriels, les k peuvent être identiques ou différents et chacun vaut 1 à 6 comme valeur moyenne ; chacun de s et t vaut 0 à 3 comme valeur moyenne, cependant, il n'y a pas de cas où les deux s et t valent 3,

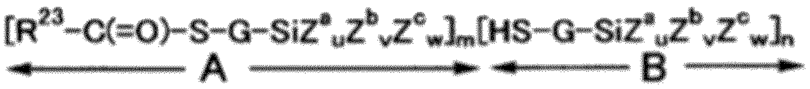

· · · (IV)

dans laquelle $R^{23}$ est un groupe alkyle linéaire, ramifié ou cyclique ayant 1 à 20 atomes de carbone ; dans le cas des G pluriels, les G peuvent être identiques ou différents et chacun est un groupe alcanediyle ou un groupe alcènediyle ayant 1 à 9 atomes de carbone ; dans le cas des $Z^a$ pluriels, les $Z^a$ peuvent être identiques ou différents et chacun est un groupe fonctionnel étant capable de se lier à deux atomes de silicium et choisi parmi $[-O-]_{0,5}$ et $[-O-G-]_{0,5}$ et $[-O-G-O-]_{0,5}$ ; dans le vas des $Z^b$ pluriels, les $Z^b$ peuvent être identiques ou différents et chacun est un groupe fonctionnel étant capable de se lier à deux atomes de silicium et représenté par $[-O-G-O-]_{0,5}$ ; dans le cas des $Z^c$ pluriels, les $Z^c$ peuvent être identiques ou différents et chacun est un groupe fonctionnel choisi parmi -Cl, -Br, $-OR^a$, $R^aC(=O)O$-, $R^aR^bC=NO$-, $R^aR^bN$-, $R^a$- et HO-G-O- (G est le même que la définition ci-dessus), et chacun de $R^a$ et $R^b$ est un groupe alkyle linéaire, cyclique ou ramifié ayant 1 à 20 atomes de carbone ; m, n, u, v et w valent $1 \leq m \leq 20$, $0 \leq n \leq 20$, $0 \leq u \leq 3$, $0 \leq v \leq 2$ et $0 \leq w \leq 1$, respectivement et $(u/2) + v + 2w = 2$ ou 3 ; dans le cas de la fraction A étant plurielle, $z^a_u$, $Z^b_v$ et $Z^c_w$ dans la fraction A plurielle peuvent être identiques ou différents et dans le cas de la fraction B étant plurielle, $z^a_u$, $Z^b_v$ et $Z^c_w$ dans la fraction plurielle B peuvent être identiques ou différents.

**4.** Procédé de préparation d'une composition de caoutchouc pour pneumatique selon la revendication 3, dans lequel l'agent de couplage de silane (C) est le composé représenté par la formule générale (I).

**5.** Procédé de préparation d'une composition de caoutchouc pour pneumatique selon l'une quelconque des revendications 1 à 4, dans lequel une teneur de la charge inorganique (B) dans la charge est de pas moins de 30 % en masse.

**6.** Procédé de préparation d'une composition de caoutchouc pour pneumatique selon l'une quelconque des revendications 1 à 5, dans lequel dans la composition de caoutchouc au premier stade de pétrissage, le nombre de molécules de l'agent peptidisant (D) est de 0,1 à 1,0 fois le nombre de molécules de l'agent de couplage de silane (C).

7. Procédé de préparation d'une composition de caoutchouc pour pneumatique selon l'une quelconque des revendications 1 à 6, dans lequel la composition de caoutchouc au premier stade de pétrissage est une comprenant un composé d'acide organique et 50 % en moles ou plus dans le composé d'acide organique est un acide stéarique.

8. Pneumatique produit en utilisant la composition de caoutchouc pour pneumatique préparé par le procédé selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010125123 A1
- JP 2014047324 A